# EUROPEAN PATENT APPLICATION

(11) **EP 4 741 732 A1**
(43) Date of publication of application: **13.05.2026**
(21) Application number: 24839369.6
(22) Date of filing: 05.06.2024
(51) Int. Cl.: F24V 30/00, F02C 3/22, F02C 7/22, F28D 20/00

(54) **HEAT GENERATION SYSTEM, THERMAL POWER GENERATION SYSTEM, AND HEAT GENERATION METHOD**

(30) Priority: 07.07.2023 JP 2023112638
(71) Applicant: Clean Planet Inc., Minato-ku Tokyo 105-0022 (JP)
(72) Inventor: YOSHINO, Shin, Tokyo 105-0022 (JP)
(74) Representative: Bandpay & Greuter
(86) International application number: PCT/JP2024/020506
(87) International publication number: WO 2025/013472

(57) **Abstract**

A heat generating system, a thermal power generating system, and a heat generating method that can generate heat with a simplified configuration without a heater when using a heat generating element using a hydrogen storage alloy or the like to generate the heat are provided. The heat generating system 1 includes a heat generating device 11 including a heat generating element in which a multilayer film that generates heat by occluding and discharging hydrogen is formed on a front surface of a support made of at least one of a porous body, a hydrogen occluding and discharging film, and a proton conductor, a sealed container that stores the heat generating element, a lead-in line 4 that leads a hydrogen-containing gas into the sealed container, a lead-out line 5 that leads out the hydrogen-containing gas supplied for the heat generating element to generate heat by occluding and discharging the hydrogen in the heat generating element; and a heat source 7 that supplies a gas that heats the heat generating element from outside the sealed container, or that heats the hydrogen-containing gas that heats the heat generating element inside the sealed container.

## Description

### Technical Field

The present invention relates to a heat generating system, a thermal power generating system, and a heat generating method.

### Background Art

It is known that a hydrogen storage alloy has properties of repeatedly occluding and discharging a large amount of hydrogen in a certain reaction condition, and is accompanied by significant reaction heat when occluding and discharging hydrogen. A heat utilization system such as a heat pump system, a heat transport system, and a cooling and heating (freezing) system, or a hydrogen storage system, which utilizes the reaction heat, has been proposed (for example, see Patent Literatures 1 and 2).

The applicants have found that in a heat generating device including a heat generating element using a hydrogen storage alloy or the like, by configuring the heat generating element with a support and a multilayer film supported on the support, heat is generated when occluding hydrogen to the heat generating element and when discharging hydrogen from the heat generating element. The applicants have previously proposed a heat utilization system and a heat generating device based on such findings (see Patent Literature 3).

Specifically, the support provided in the heat generating element of the heat generating device is made of at least one of a porous body, a hydrogen permeable film, and a proton conductor, and the multilayer film supported on the support, for example, is formed by alternately stacking a first layer that is made of a hydrogen storage metal or a hydrogen storage alloy and has a thickness of less than 1000 nm, and a second layer that is made of a hydrogen storage metal or a hydrogen storage alloy, which is different from that of the first layer, or ceramics and has a thickness of less than 1000 nm.

### Citation List

### Patent Literature

Patent Literature 1: JPS56-100276A
Patent Literature 2: JPS58-022854A
Patent Literature 3: JP6749035B

### Summary of Invention

### Technical Problem

However, in the heat generating device using the heat generating element using the hydrogen storage alloy or the like proposed in Patent Literature 3, it is necessary to use a heater to heat hydrogen or the heat generating element, and there is a demand for a simplified device that does not use a heater.

An object of the present invention is to provide a heat generating system, a thermal power generating system, and a heat generating method that can generate heat with a simplified configuration without a heater when using a heat generating element using a hydrogen storage alloy or the like to generate the heat.

### Solution to Problem

A heat generating system according to the present invention includes a heat generating device including a heat generating element in which a multilayer film that generates heat by occluding and discharging hydrogen is formed on a front surface of a support made of at least one of a porous body, a hydrogen occluding and discharging film, and a proton conductor, a sealed container that stores the heat generating element, a lead-in line that leads a hydrogen-containing gas into the sealed container, and a lead-out line that leads out the hydrogen-containing gas supplied for the heat generating element to generate heat by occluding and discharging the hydrogen in the heat generating element; and a heat source that supplies a gas that heats the heat generating element from outside the sealed container, or that heats the hydrogen-containing gas that heats the heat generating element inside the sealed container.

A thermal power generating system according to the present invention includes: a heat generating device including a heat generating element in which a multilayer film that generates heat by occluding and discharging hydrogen is formed on a front surface of a support made of at least one of a porous body, a hydrogen occluding and discharging film, and a proton conductor, a sealed container that stores the heat generating element, a lead-in line that leads a hydrogen-containing gas into the sealed container, and a lead-out line that leads out the hydrogen-containing gas supplied for the heat generating element to generate heat by occluding and discharging the hydrogen in the heat generating element; and a thermal power generating device including a gas turbine, in which the gas turbine includes a hydrogen boiler that discharges a gas that heats the heat generating element from outside the sealed container or a gas that heats the hydrogen-containing gas that heats the heat generating element inside the sealed container, or that heats the hydrogen-containing gas that heats the heat generating element from outside the sealed container or inside the sealed container.

A thermal power generating system according to the present invention includes: a heat generating device including a heat generating element in which a multilayer film that generates heat by occluding and discharging hydrogen is formed on a front surface of a support made of at least one of a porous body, a hydrogen occluding and discharging film, and a proton conductor, a sealed container that stores the heat generating element, a lead-in line that leads a hydrogen-containing gas into the sealed container, and a lead-out line that leads out the hydrogen-containing gas supplied for the heat generating element to generate heat by occluding and discharging the hydrogen in the heat generating element; a hydrogen boiler that heats the hydrogen-containing gas for heating the heat generating element from outside the sealed container or inside the sealed container; and a hydrogen combustion boiler that combusts the hydrogen-containing gas heated by the heat generated by the heat generating element due to the occluding and discharging of the hydrogen in the heat generating element.

A heat generating method according to the present invention includes: storing, in a sealed container, a heat generating element in which a multilayer film that generates heat by occluding and discharging hydrogen is formed on a front surface of a support made of at least one of a porous body, a hydrogen occluding and discharging film, and a proton conductor; supplying, from a heat source, a gas that heats the heat generating element from outside the sealed container, or heating, by the heat source, a hydrogen-containing gas that heats the heat generating element inside the sealed container; and leading the hydrogen-containing gas into the sealed container, and causing the heat generating element to generate heat by occluding and discharging the hydrogen in the heat generating element.

### Advantageous Effects of Invention

According to the present invention, heat can be generated with a simplified configuration without a heater when using a heat generating element using a hydrogen storage alloy or the like to generate heat.

### Brief Description of Drawings

Fig. 1 is a schematic diagram of a heat generating system according to a first embodiment.
Fig. 2A is a diagram illustrating a heat generating device.
Fig. 2B is a diagram illustrating another configuration of the heat generating device.
Fig. 3 is a cross-sectional view illustrating a structure of a heat generating element.
Fig. 4 is a cross-sectional view illustrating a structure of a stacked body having a first layer and a second layer.
Fig. 5 is a diagram illustrating generation of excess heat.
Fig. 6 is a schematic diagram of a thermal power generating system according to a second embodiment.
Fig. 7 is a diagram illustrating a heat generating device.
Fig. 8A is a schematic diagram of a thermal power generating system according to a third embodiment.
Fig. 8B is a schematic diagram of a thermal power generating system having another configuration according to the third embodiment.
Fig. 9 is a schematic diagram of a thermal power generating system according to a first modification.
Fig. 10 is a schematic diagram of a thermal power generating system according to a second modification.
Fig. 11 is a diagram illustrating a heat generating device.
Fig. 12 is a schematic diagram of a thermal power generating system according to a third modification.
Fig. 13A is a schematic diagram of a thermal power generating system according to a fourth embodiment.
Fig. 13B is a schematic diagram of a thermal power generating system having another configuration according to the fourth embodiment.
Fig. 14 is a diagram illustrating improvement in thermal efficiency of a thermal power generating system.
Fig. 15 is a diagram illustrating a heat generating element having a first layer, a second layer, and a third layer according to a fourth modification.
Fig. 16 is a diagram illustrating a heat generating element having a first layer, a second layer, a third layer, and a fourth layer according to a fifth modification.

### Description of Embodiments

### [First Embodiment]

A heat generating system 1 according to a first embodiment is described.

### (Heat Generating System 1)

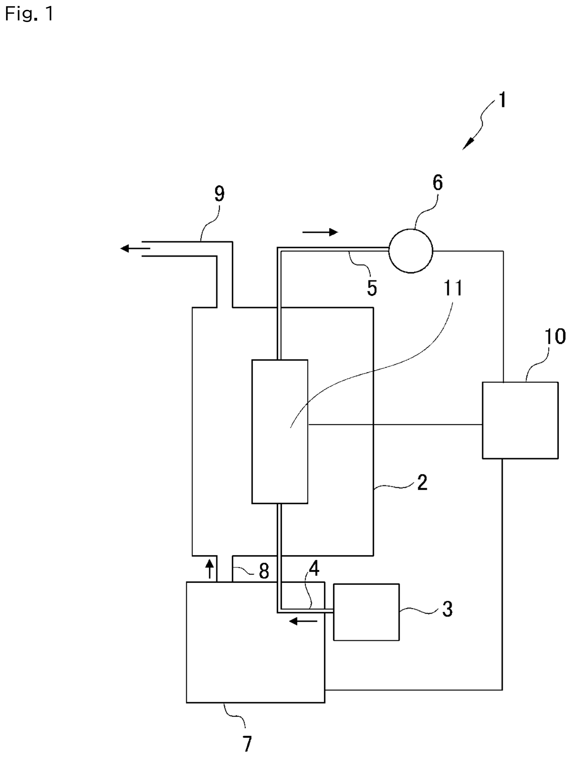

Fig. 1 is a schematic diagram of the heat generating system 1 according to the present embodiment. The illustrated heat generating system 1 is configured such that a heat generating device 11 is housed in a storage container 2. The heat generating device 11 is connected via a lead-in line 4 to a hydrogen tank 3 that supplies a hydrogen-containing gas (hereinafter, referred to as a hydrogen-based gas), and the hydrogen-based gas is led into the heat generating device 11. The heat generating device 11 is connected via a lead-out line 5 to a pump 6, and the hydrogen-based gas supplied for the heat generating device 11 to generate heat is discharged. The storage container 2 is connected via a pipe 8 to a heat source 7, a gas that heats a heat generating element 14 (to be described later) of the heat generating device 11 is supplied from the heat source 7. The storage container 2 is connected to the outside of the heat generating system 1 via a pipe 9. A control unit 10 is provided and connected to the heat generating device 11, the heat source 7, the pump 6, and the like.

The heat generating system 1 illustrated in Fig. 1 illustrates a configuration in which the gas that heats the heat generating element 14 of the heat generation device 11 from outside the heat generating device 11 is supplied from the heat source 7. The gas that heats the heat generating element 14 of the heat generation device 11 from outside the heat generation device 11 is, for example, a combustion gas of a gas turbine or a heated hydrogen-based gas. The gas that heats the heat generating element 14 of the heat generation device 11 from outside the heat generation device 11 heats the heat generating element 14 to a temperature appropriate for heat generation.

The gas that comes into contact with the heat generating element 14 of the heat generation device 11 in the heat generation device 11 to heat the heat generating element 14 of the heat generation device 11 may be heated by the heat source 7. The gas that heats the heat generating element 14 inside the heat generation device 11 is, for example, the hydrogen-based gas that is heated by a heat source in advance before being supplied for the heat generating element 14 to generate heat. The gas that heats the heat generating element 14 of the heat generation device 11 in the heat generation device 11 heats the heat generating element 14 to a temperature appropriate for heat generation.

### (Storage Container 2)

The storage container 2 is, for example, a hollow container, and houses the heat generating device 11 therein. The storage container 2 is made of, for example, stainless steel. The heat generating system 1 is configured such that the gas that heats the heat generating element 14 of the heat generating device 11 is supplied from the heat source 7, and the storage container 2 may not be a container including a defined space. For example, the heat generating system 1 may be configured such that the heat generating device 11 is installed in a flow path or the like that discharges the combustion gas of the gas turbine.

### (Hydrogen Tank 3)

The hydrogen tank 3 stores the hydrogen-based gas. The hydrogen-based gas is a gas containing isotopes of hydrogen. As the hydrogen-based gas, at least one of a deuterium gas and a protium gas is used. The protium gas includes a mixture of naturally occurring protium and deuterium, that is, a mixture in which an abundance ratio of protium is 99.985% and an abundance ratio of deuterium is 0.015%.

### (Heat Generating Device 11)

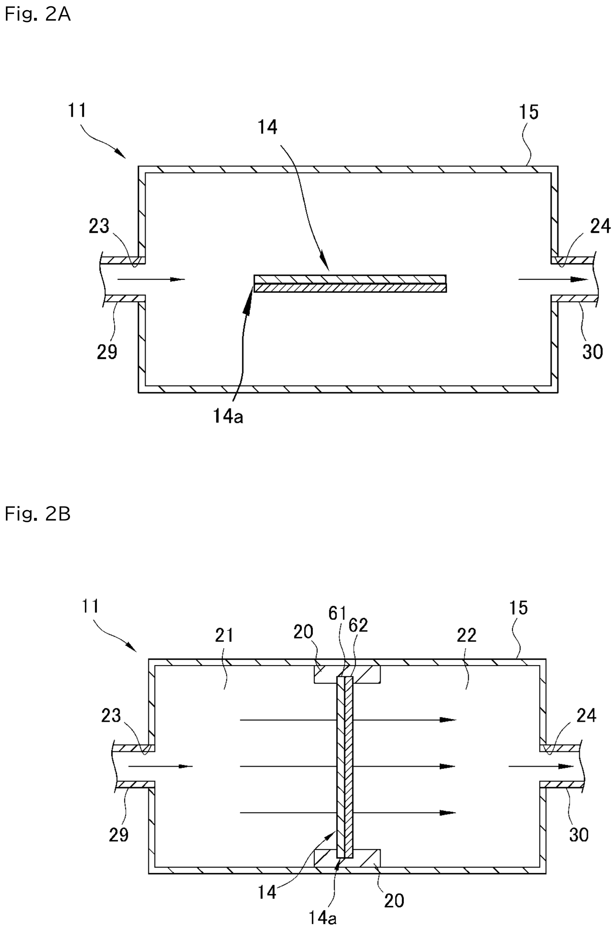

Fig. 2A is a diagram illustrating the heat generating device 11. The illustrated heat generating device 11 is configured such that the heat generating element 14 is stored in a sealed container 15. The heat generating element 14 generates heat (hereinafter, referred to as excess heat) by occluding and discharging hydrogen. The heat generating element 14 is heated, for example, to a temperature in a range of 50°C or higher and 1000°C or lower by generating the excess heat. In this example, the heat generating element 14 is formed into a plate shape having a front surface and a back surface. A detailed configuration of the heat generating element 14 will be described later with reference to another drawing, but a surface area of the heat generating element 14 is adjusted in advance such that the heat generating element 14 is heated to a predetermined temperature.

The sealed container 15 is a hollow container, and houses the heat generating element 14 therein. The sealed container 15 is made of, for example, stainless steel. In this example, the sealed container 15 is formed into a shape with a longitudinal direction perpendicular to a direction perpendicular to the front surface or the back surface of the heat generating element 14. The heat generating element 14 is installed inside the sealed container 15 by an installation portion (not illustrated).

The sealed container 15 has an inlet 23 connected to a lead-in line 29. The lead-in line 29 is connected to the lead-in line 4 of the heat generating system 1 in Fig. 1. The hydrogen-based gas is led into the sealed container 15 from the hydrogen tank 3 through the inlet 23. The sealed container 15 has an outlet 24 connected to a lead-out line 30. The lead-out line 30 is connected to the lead-out line 5 of the heat generating system 1 in Fig. 1. The hydrogen-based gas in the sealed container 15 is discharged from the sealed container 15 to the outside of the heat generating device 11 through the lead-out line 30 connected to the outlet 24.

The hydrogen-based gas from the hydrogen tank 3 is led into the sealed container 15. In this case, hydrogen molecules contained in the hydrogen-based gas are adsorbed onto the heat generating element 14, and each of the hydrogen molecules dissociates into two hydrogen atoms. The hydrogen atoms obtained by dissociation infiltrate into the heat generating element 14. That is, hydrogen is occluded into the heat generating element 14. After hydrogen is occluded into the heat generating element 14, the sealed container 15 is depressurized, for example, to 1 × 10⁻⁴ [Pa] or less to lead out the hydrogen-based gas, or is evacuated by driving the pump 6. Accordingly, due to a difference in concentrations between hydrogen inside the heat generating element 14 and hydrogen inside the sealed container 15 but outside the heat generating element 14, the hydrogen atoms diffuse inside the heat generating element 14, and the heat generating element 14 occludes and discharges hydrogen. As will be described in detail later, as hydrogen diffuses, the heat generating element 14 generates heat by occluding hydrogen, and also generates heat by discharging hydrogen.

In the configuration illustrated in Fig. 2A, even if only a small amount of hydrogen is supplied to the heat generating element 14, the heat generating element 14 can generate heat by occluding and discharging hydrogen. The heat of the heat generating element 14 can be recovered and utilized.

Fig. 2B is a diagram illustrating the heat generating device 11 having another configuration different from the configuration illustrated in Fig. 2A. The sealed container 15 is a hollow container, and houses the heat generating element 14 therein. The sealed container 15 is made of, for example, stainless steel. In this example, the sealed container 15 is formed into a shape with a longitudinal direction parallel to a direction perpendicular to the front surface or the back surface of the heat generating element 14. An installation portion 20 for installing the heat generating element 14 is provided in the sealed container 15.

A first chamber 21 and a second chamber 22 partitioned by the heat generating element 14 are included in the sealed container 15. The first chamber 21 is formed by the front surface that is one surface of the heat generating element 14 and an inner surface of the heat generating container 15. The first chamber 21 has the inlet 23 connected to the lead-in line 29. The lead-in line 29 is connected to the lead-in line 4 of the heat generating system 1 in Fig. 1. The hydrogen-based gas is led into the first chamber 21 from the hydrogen tank 3 through the inlet 23. The second chamber 22 is formed by the back surface that is the other surface of the heat generating element 14 and the inner surface of the heat generating container 15. The second chamber 22 has the outlet 24 connected to the lead-out line 30. The lead-out line 30 is connected to the lead-out line 5 of the heat generating system 1 in Fig. 1. The hydrogen-based gas in the second chamber 22 is discharged from the second chamber 22 to the outside of the heat generating device 11 through the lead-out line 30 connected to the outlet 24.

The first chamber 21 is pressurized by leading in the hydrogen-based gas from the hydrogen tank 3. The second chamber 22 is depressurized by leading out the hydrogen-based gas by driving the pump 6. Accordingly, a hydrogen pressure in the first chamber 21 is higher than a hydrogen pressure in the second chamber 22. The hydrogen pressure in the first chamber 21 is, for example, 100 [kPa]. The hydrogen pressure in the second chamber 22 is, for example, 1 × 10⁻⁴ [Pa] or less. The second chamber 22 may be in a vacuum state. In this manner, the first chamber 21 and the second chamber 22 have different hydrogen pressures. Therefore, the inside of the sealed container 15 is in a state in which a pressure difference is generated between two sides of the heat generating element 14. Pressure adjustment valves (not illustrated) for adjusting pressures in the first chamber 21 and the second chamber 22 as described above are appropriately provided on paths of the lead-in line 29 and the lead-out line 30.

When the pressure difference is generated between the two sides of the heat generating element 14, a hydrogen molecule contained in the hydrogen-based gas is adsorbed on one surface (the front surface) of the heat generating element 14 at a high pressure side, and the hydrogen molecule is dissociated into two hydrogen atoms. The hydrogen atoms obtained by dissociation infiltrate into the heat generating element 14. That is, hydrogen is occluded into the heat generating element 14. The hydrogen atoms diffuse into and pass through the heat generating element 14. On the other surface (the back surface) of the heat generating element 14 at a low pressure side, the hydrogen atoms that pass through the heat generating element 14 are recombined with each other and discharged as a hydrogen molecule. That is, hydrogen is discharged from the heat generating element 14.

As described above, the heat generating element 14 occludes and discharges hydrogen. As will be described in detail later, as hydrogen diffuses, the heat generating element 14 generates heat by occluding hydrogen, and also generates heat by discharging hydrogen.

When the heat generating element 14 occludes and discharges hydrogen, if the hydrogen-based gas is sufficiently supplied, hydrogen permeates through the heat generating element 14 from the high pressure side to the low pressure side. The phrase "permeate" refers to that hydrogen is occluded on the one surface of the heat generating element and discharged from the other surface of the heat generating element. Therefore, the heat generating element 14 generates heat by permeation of hydrogen. In the following description, "hydrogen permeates through" the heat generating element may be described as "the hydrogen-based gas permeates through" the heat generating element. When the hydrogen-based gas permeates through the heat generating element 14, the hydrogen-based gas may be heated by heat of the heat generating element 14. The heated hydrogen-based gas can be utilized as, for example, fuel of a gas turbine.

Heat generation in the heat generating element 14 is not limited to a case where hydrogen permeates through the heat generating element 14, as in the configuration illustrated in Fig. 2B. As in the configuration illustrated in Fig. 2A or the like, heat is also generated when hydrogen is occluded into and discharged from the heat generating element 14, and even if only a small amount of hydrogen-based gas is supplied to the heat generating element 14, the occluding and discharging of the hydrogen can cause the heat generating element 14 to generate heat. In this case, the amount of supplied hydrogen-based gas is small and insufficient to be utilized as the hydrogen-based gas, but the heat from the heat generating element 14 can be recovered and utilized. If the heat generating element 14 does not come into direct contact with hydrogen, the hydrogen-based gas supplied for the heat generating element 14 to generate heat is recovered and reused or discharged into the atmosphere.

In the configuration illustrated in Fig. 2A, a pressure sensor (not illustrated) that detects a pressure inside the sealed container 15 is provided inside the sealed container 15. The pressure sensor is electrically connected to the control unit 10, and outputs a signal corresponding to the detected pressure to the control unit 10.

In the configuration illustrated in Fig. 2B, a pressure sensor (not illustrated) that detects a pressure inside the first chamber 21 is provided inside the first chamber 21. A pressure sensor (not illustrated) that detects a pressure inside the second chamber 22 is provided inside the second chamber 22. The pressure sensors provided in the first chamber 21 and the second chamber 22 are electrically connected to the control unit 10, and output signals corresponding to the detected pressures to the control unit 10.

In the heat generating system 1, the gas that heats the heat generating element 14 of the heat generation device 11 from outside the heat generating device 11 is supplied from the heat source 7. The gas that heats the heat generating element 14 of the heat generation device 11 from outside the heat generation device 11 is, for example, a combustion gas of a gas turbine or a heated hydrogen-based gas. Accordingly, a temperature of the heat generating element 14 is maintained at an appropriate temperature for heat generation.

The gas that comes into contact with the heat generating element 14 of the heat generation device 11 in the heat generation device 11 to heat the heat generating element 14 of the heat generation device 11 may be heated by the heat source 7. The gas that heats the heat generating element 14 inside the heat generation device 11 is, for example, the hydrogen-based gas before being supplied for the heat generating element 14 to generate heat. Accordingly, the temperature of the heat generating element 14 is maintained at an appropriate temperature for heat generation.

The appropriate temperature for heat generation in the heat generating element 14 is within a range of, for example, 50°C or higher and 1000°C or lower. In the heat generation device 11, a temperature sensor (not illustrated) is provided. The temperature sensor detects the temperature of the heat generating element 14. The temperature sensor is, for example, a thermocouple, and is provided at the installation portion 20 or the like of the sealed container 15. The temperature sensor may be configured to detect a temperature of the hydrogen-based gas. The temperature sensor is electrically connected to the control unit 10, and outputs a signal corresponding to the detected temperature to the control unit 10.

A filter that removes impurities contained in the hydrogen-based gas is provided on the path of the lead-in line 29 as necessary. Here, the amount of hydrogen occluded in and discharged from the heat generating element 14 (hereinafter, referred to as a hydrogen occluding and discharging amount) or a permeation amount of hydrogen permeating through the heat generating element 14 (hereinafter, referred to as a hydrogen permeation amount) when hydrogen permeates through the heat generating element 14 is determined by the temperature of the heat generating element 14, a pressure of the hydrogen-based gas led into the sealed container 15 or the pressure difference between two sides of the heat generating element 14, and a front surface state of the heat generating element 14. When the hydrogen-based gas contains impurities, the impurities may adhere to the front surface of the heat generating element 14, and may deteriorate the front surface state of the heat generating element 14. When the impurities adhere to the front surface of the heat generating element 14, adsorption and dissociation of the hydrogen molecules on the front surface of the heat generating element 14 are hindered, and the hydrogen occluding and discharging amount or the hydrogen permeation amount decreases.

Examples of the impurities that hinder the adsorption and dissociation of the hydrogen molecules on the front surface of the heat generating element 14 include water (including steam), hydrocarbons (methane, ethane, methanol, ethanol, and the like), C, S, and Si. It is considered that water is discharged from an inner wall or the like of the sealed container 15, or is obtained by reducing, by hydrogen, an oxide film contained in a member provided inside the sealed container 15. It is considered that hydrocarbons, C, S, and Si are discharged from various members provided inside the sealed container 15. Therefore, the filter at least removes the impurities including water (including steam), hydrocarbons, C, S, and Si. The filter removes the impurities contained in the hydrogen-based gas, so that the hydrogen occluding and discharging amount or the hydrogen permeation amount in the heat generating element 14 can be prevented from decreasing.

### (Control Unit 10)

The control unit 10 is connected to the pressure sensor and the temperature sensor of the heat generating device 11, the pump 6, the pressure adjustment valves (not illustrated) on paths of the lead-in line 4 and the lead-out line 5, the heat source 7, and the like, and controls an operation of each of the units of the heat generating system 1. The control unit 10 mainly includes, for example, an arithmetic device (a central processing unit), and a storage unit such as a read only memory and a random access memory. The arithmetic device executes various kinds of arithmetic processing using a program, data, and the like stored in the storage unit.

The control unit 10 adjusts the temperature and a supply amount of the gas from the heat source that heats the hydrogen-based gas before being supplied for the heat generating device 11 to generate heat, adjusts the pressure of the sealed container 15 or the like, and performs a hydrogen occluding step of occluding hydrogen in the heat generating element 14 and a hydrogen discharging step of discharging hydrogen from the heat generating element 14. In the present embodiment, in the configuration in Fig. 2A, the control unit 10 performs the hydrogen occluding step and the hydrogen discharging step by depressurizing or evacuating the sealed container 15 after supplying the hydrogen-based gas into the sealed container 15. The control unit 10 may alternately repeat the hydrogen occluding step and the hydrogen discharging step. That is, the control unit 10 may first perform the hydrogen occluding step to occlude hydrogen in the heat generating element 14, and thereafter perform the hydrogen discharging step to discharge hydrogen occluded in the heat generating element 14. In this manner, the excess heat can be generated by the heat generating element 14 by alternately repeating the hydrogen occluding step and the hydrogen discharging step. The control unit 10 simultaneously performs the hydrogen occluding step and the hydrogen discharging step by generating a hydrogen pressure difference between the first chamber 21 and the second chamber 22 in the configuration of Fig. 2B. The above phrase "simultaneously" refers to exact simultaneous or refers to a short period of time to an extent that can be regarded as substantially simultaneous. Since the heat generating element 14 continuously occludes and discharges hydrogen by simultaneously performing the hydrogen occluding step and the hydrogen discharging step, the excess heat can be efficiently generated in the heat generating element 14. The control unit 10 may alternately repeat the hydrogen occluding step and the hydrogen discharging step. That is, the control unit 10 may first perform the hydrogen occluding step to occlude hydrogen in the heat generating element 14, and thereafter perform the hydrogen discharging step to discharge hydrogen occluded in the heat generating element 14. In this manner, the excess heat can be generated by the heat generating element 14 by alternately repeating the hydrogen occluding step and the hydrogen discharging step.

In the heat generating device 11, when the heat generating element 14 occludes and discharges hydrogen, the excess heat is generated. In the configuration illustrated in Fig. 2A, the gas passing the inside of the storage container 2 but passing the outside of the heat generating device 11, for example, the gas supplied from the heat source 7, is heated by the excess heat of the heat generating element 14. In this case, the excess heat of the heat generating element 14 is thermally conducted to the gas passing the outside of the heat generating device 11, and the larger the surface area of the heat generating element 14, the greater the excess heat generated by the heat generating element 14, and the temperature of the gas passing the outside of the heat generating device 11 becomes higher accordingly. Therefore, in the heat generating element 14, the surface area of the heat generating element 14 to be described later is set to a predetermined size such that the gas passing the outside of the heat generating device 11 becomes a predetermined temperature.

Alternatively, in the configuration illustrated in Fig. 2B, the gas passing the inside of the heat generating device 11, for example, the hydrogen-based gas, is heated by the excess heat of the heat generating element 14. In this case, when the hydrogen-based gas permeates through the heat generating element 14, the hydrogen-based gas is heated by excess heat generated by the heat generating element 14. The thicker the heat generating element 14 and the longer a distance for the hydrogen-based gas to permeate through the heat generating element 14, the longer a time the hydrogen-based gas is heated by the excess heat generated by the heat generating element 14, and a temperature in the case where the hydrogen-based gas permeates through the heat generating element 14 and is discharged into the second chamber 22 becomes higher accordingly. Therefore, in the heat generating element 14, the thickness of the heat generating element 14 is set to a predetermined thickness by stacking a predetermined number of stacked bodies to be described later such that the hydrogen-based gas after permeating through the heat generating element 14 becomes a predetermined temperature.

### (Heat Generating Element 14)

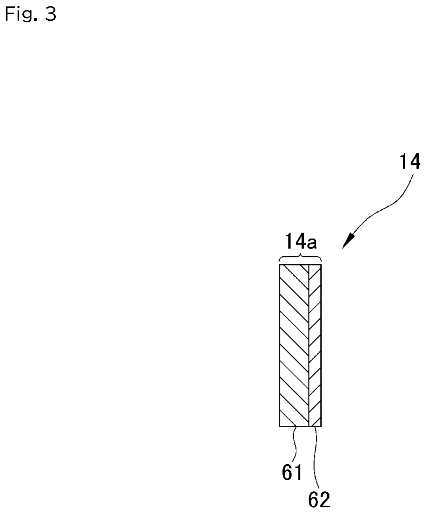

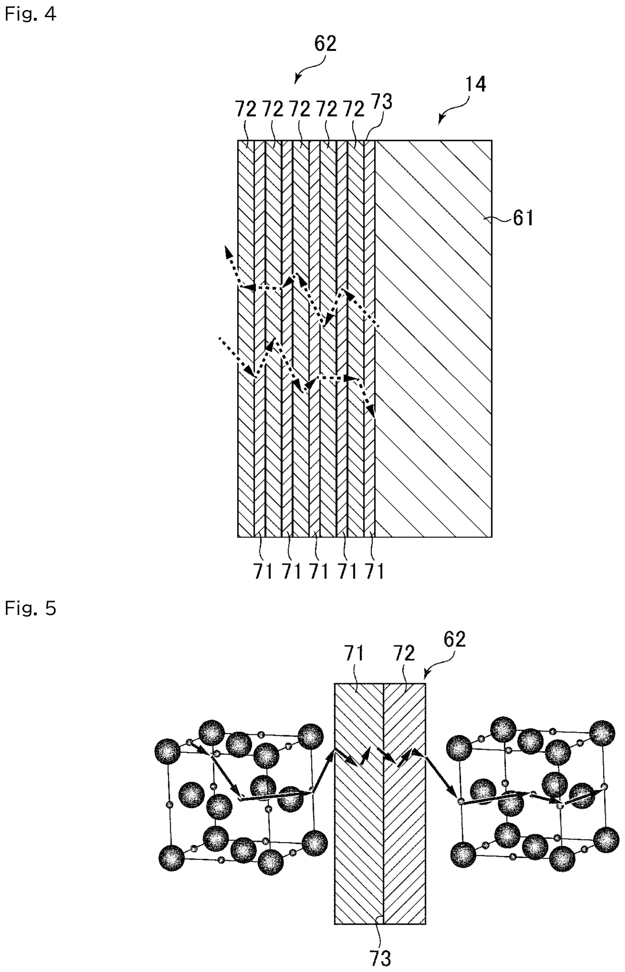

Next, a detailed structure of the heat generating element 14 will be described with reference to Figs. 3 and 4. As illustrated in Fig. 3, the heat generating element 14 has a stacked body 14a including a support 61 and a multilayer film 62.

Here, for example, a hydrogen-based gas of about 25°C is occluded in the heat generating element 14 and discharged from the heat generating element 14, so that the hydrogen-based gas is heated by the heat generating element 14 and becomes a hydrogen-based gas of 50°C or higher and 1000°C or lower, and preferably 600°C or higher and 1000°C or lower after permeating through the heat generating element 14. In the present embodiment, a direction in which the hydrogen-based gas is led in or a direction in which the hydrogen-based gas permeates may be any direction.

The support 61 may have any configuration that allows the hydrogen-based gas to be occluded in the heat generating element 14 and discharged from the heat generating element 14, and is made of at least one of a porous body, a hydrogen occluding and discharging film, and a proton conductor. In this example, the support 61 is formed in a plate shape having a front surface and a back surface. The porous body has, for example, pores having a size that allows the hydrogen-based gas to pass therethrough. The porous body is made of, for example, a metal, a non-metal, or ceramics. The porous body is preferably made of a material that does not hinder a reaction (hereinafter, referred to as a heat generating reaction) between the hydrogen-based gas and the multilayer film 62. The hydrogen occluding and discharging film may be a hydrogen permeable film, and is made of, for example, a hydrogen storage metal or a hydrogen storage alloy. Examples of the hydrogen storage metal include Ni, Pd, V, Nb, Ta, and Ti. Examples of the hydrogen storage alloy include LaNi₅, CaCu₅, MgZn₂, ZrNi₂, ZrCr₂, TiFe, TiCo, Mg₂Ni, and Mg₂Cu. The hydrogen occluding and discharging film includes a film having a mesh-like sheet. Examples of the proton conductor include a BaCeO₃-based conductor (for example, Ba(Ce_{0.95}Y_{0.05})O_{3-δ}), a SrCeO₃-based conductor (for example, Sr(Ce_{0.95}Y_{0.05})O_{3-δ}), a CaZrO₃-based conductor (for example, CaZr_{0.95}Y_{0.05}O_{3-α}), a SrZrO₃-based conductor (for example, SrZr_{0.9}Y_{0.1}O_{3-α}) , β Al₂O₃, and β Ga₂O₃.

As illustrated in Fig. 4, the multilayer film 62 is provided on the support 61. The multilayer film 62 has a first layer 71 made of a hydrogen storage metal or a hydrogen storage alloy, and a second layer 72 made of a hydrogen storage metal or a hydrogen storage alloy different from the first layer 71, or ceramics. A heterogeneous material interface 73 to be described later is formed between the support 61 and the first layer 71, between the first layer 71 and the second layer 72, and between the support 61 and the second layer 72. In Fig. 4, the multilayer film 62 is formed by alternately stacking the first layer 71 and the second layer 72 in this order on one surface (for example, the front surface) of the support 61. The first layer 71 and the second layer 72 each have five layers. The number of layers of each of the first layer 71 and the second layer 72 may be changed as appropriate. The multilayer film 62 may be formed by alternately stacking the second layer 72 and the first layer 71 in this order on the front surface of the support 61. The multilayer film 62 may have one or more first layers 71 and one or more second layers 72, and may have one or more heterogeneous material interfaces 73.

The first layer 71 is made of, for example, any one of Ni, Pd, Cu, Mn, Cr, Fe, Mg, Co, and an alloy thereof. The alloy for forming the first layer 71 is preferably an alloy made of two or more of Ni, Pd, Cu, Mn, Cr, Fe, Mg, and Co. The alloy for forming the first layer 71 may be an alloy obtained by adding an additive element to Ni, Pd, Cu, Mn, Cr, Fe, Mg, and Co.

The second layer 72 is made of, for example, any one of Ni, Pd, Cu, Mn, Cr, Fe, Mg, Co, an alloy thereof, and SiC. The alloy for forming the second layer 72 is preferably an alloy made of two or more of Ni, Pd, Cu, Mn, Cr, Fe, Mg, and Co. The alloy for forming the second layer 72 may be an alloy obtained by adding an additive element to Ni, Pd, Cu, Mn, Cr, Fe, Mg, or Co.

A combination of the first layer 71 and the second layer 72 is preferably Pd-Ni, Ni-Cu, Ni-Cr, Ni-Fe, Ni-Mg, and Ni-Co when types of elements are expressed as "first layer 71-second layer 72 (second layer 72-first layer 71)". When the second layer 72 is made of ceramics, the "first layer 71-second layer 72" is preferably Ni-SiC.

A behavior of hydrogen atoms at the heterogeneous material interface 73 will be described. As illustrated in Fig. 5, the hydrogen atoms can permeate through the heterogeneous material interface 73. Fig. 5 is a schematic diagram illustrating a state in which hydrogen atoms in a metal lattice of the first layer 71 permeate through the heterogeneous material interface 73 and move to a metal lattice of the second layer 72 in the first layer 71 and the second layer 72 each made of a hydrogen storage metal having a face-centered cubic structure. It is known that hydrogen is light and performs quantum diffusion while hopping in hydrogen-occupied sites (octahedral sites or tetrahedral sites) of substance A and substance B. Therefore, hydrogen occluded in the heat generating element 14 performs quantum diffusion while hopping in the multilayer film 62. In the heat generating element 14, hydrogen permeates through the first layer 71, the heterogeneous material interface 73, and the second layer 72 in a manner of quantum diffusion.

A thickness of each of the first layer 71 and the second layer 72 is preferably less than 1000 nm. When the thickness of each of the first layer 71 and the second layer 72 is 1000 nm or more, hydrogen is less likely to permeate through the multilayer film 62. When the thickness of each of the first layer 71 and the second layer 72 is less than 1000 nm, a nano-structure that does not exhibit a bulk property can be maintained. The thickness of each of the first layer 71 and the second layer 72 is more preferably less than 500 nm. When the thickness of each of the first layer 71 and the second layer 72 is less than 500 nm, a nano-structure that does not exhibit a bulk property at all can be maintained.

An example of a method for manufacturing the heat generating element 14 will be described. In this case, the plate-shaped support 61 is prepared, an evaporation device is used to make a hydrogen storage metal or a hydrogen storage alloy for forming the first layer 71 or the second layer 72 into a gas phase state, and then the first layer 71 and the second layer 72 are alternately formed on the front surface of the support 61 by aggregation or adsorption. Accordingly, the stacked body 14a having the multilayer film 62 on the front surface of the support 61 is formed. The first layer 71 and the second layer 72 are preferably formed continuously in a vacuum state. Accordingly, between the first layer 71 and the second layer 72, no natural oxide film is formed and only the heterogeneous material interface 73 is formed. The evaporation device may use a physical evaporation device in which the hydrogen storage metal or the hydrogen storage alloy is evaporated by a physical method. The physical evaporation device is preferably a sputtering device, a vacuum evaporation device, and a chemical vapor deposition (CVD) device. The hydrogen storage metal or the hydrogen storage alloy may be deposited on the front surface of the support 61 by an electroplating method, and the first layer 71 and the second layer 72 may be alternately formed.

In Fig. 4, the multilayer film 62 is stacked on one surface (for example, the front surface) of the support 61, but is not limited thereto. The multilayer film 62 may be stacked on the other surface (for example, the back surface) of the support 61, or the multilayer film 62 may be stacked on both surfaces (the front surface and the back surface) of the support 61.

### (Heat Source 7)

The heat source 7 supplies the gas that heats the heat generating element 14 from outside the sealed container 15 constituting the heat generating device 11. Alternatively, the heat source 7 heats the hydrogen-based gas that heats the heat generating element 14 inside the sealed container 15. Such a heat source 7 is, for example, a thermal power generating device having a gas turbine, a thermal power generating device having a gas turbine and a steam turbine, a thermal power generating device having a hydrogen combustion gas turbine, and a hydrogen boiler.

### (Operations of Heat Generating System 1)

Next, operations of the heat generating system 1 configured as described above will be described. As illustrated in Fig. 1, the heat source 7 supplies the gas that heats the heat generating element 14 from outside the sealed container 15 constituting the heat generating device 11, or the heat source 7 heats the hydrogen-based gas that heats the heat generating element 14 inside the sealed container 15, thereby heating the heat generating element 14 to a predetermined temperature. The excess heat is generated by occluding hydrogen into the multilayer film 62 and discharging hydrogen from the multilayer film 62. Specifically, a hydrogen molecule is adsorbed onto the surface of the multilayer film 62 of each heat generating element 14, dissociates into two hydrogen atoms, and penetrates into the heat generating element 14, the hydrogen atoms are occluded in the heat generating element 14 and diffuse inside the heat generating element 14, and occluding and discharging of hydrogen is performed in the heat generating element 14. In this manner, the hydrogen atoms permeate through the heterogeneous material interface 73 (see Fig. 5) of the multilayer film 62 in a manner of quantum diffusion, or the hydrogen atoms diffuse through the heterogeneous material interface 73 in a manner of quantum diffusion, and thus the excess heat equal to or higher than the heating temperature can be generated in each heat generating element 14. In the heat generating system 1, hydrogen may be continuously occluded in and discharged from each heat generating element 14, so that the excess heat can be efficiently generated. In the heat generating system 1, the gas passing the outside of the heat generating device 11, for example, the gas supplied from the heat source 7, is heated by the excess heat of the heat generating element 14. The excess heat recovered by the gas supplied from the heat source 7 or the like is used as heat energy. Alternatively, the excess heat of the heat generating element 14 heats the gas passing the inside of the heat generating device 11, for example, the hydrogen-based gas. The heated hydrogen-based gas is utilized by being combusted in a hydrogen combustion device such as a hydrogen combustion gas turbine or a hydrogen combustion boiler.

### (Effects of Heat Generating System 1)

According to the heat generating system 1 of the present embodiment, heat can be generated with a simplified configuration without a heater when using a heat generating element using a hydrogen storage alloy or the like to generate heat.

Since the heat generating element 14 generates heat using hydrogen, the heat generating element 14 can be said as a clean heat energy source without generating a greenhouse gas such as carbon dioxide. Hydrogen to be used is generated from water and is thus inexpensive. Unlike a nuclear fission reaction, heat generation of the heat generating element 14 is safe since there is no chain reaction. Therefore, by using such a heat generating element 14 as the heat energy source, the heat generating device 11 can obtain excess heat or heated hydrogen-based gas by utilizing an inexpensive, clean, and safe heat energy source. An electrothermal design of the heat generating element 14 used in the present embodiment is easy.

The excess heat obtained as described above can be utilized as heat energy. Alternatively, the obtained heated hydrogen-based gas can be utilized in a hydrogen combustion device such as a hydrogen combustion gas turbine or a hydrogen combustion boiler.

### (Heat Generating Method)

A heat generating method of the present embodiment stores, in the sealed container 15, the heat generating element 14 in which the multilayer film 62 that generates heat by occluding and discharging hydrogen is formed on the front surface of the support 61 made of at least one of a porous body, a hydrogen occluding and discharging film, and a proton conductor. Next, the gas that heats the heat generating element 14 from outside the sealed container 15 is supplied from the heat source 7, or the hydrogen-based gas that heats the heat generating element 14 in the sealed container 15 is heated by the heat source 7. Subsequently, the hydrogen-based gas is led into the sealed container 15, and the heat generating element 14 generates the heat by occluding and discharging hydrogen in the heat generating element 14.

### (Effects of Heat Generating Method)

According to the heat generating method of the present embodiment, heat can be generated with a simplified configuration without a heater when using the heat generating element 14 using a hydrogen storage alloy or the like to generate heat.

The present invention is not limited to the above embodiment, and can be modified as appropriate without departing from the scope of the present invention. Hereinafter, another embodiment and modifications will be described. In the drawings and descriptions of the other embodiments and the modifications, the same or equivalent components and members as those of the embodiment are denoted by the same reference numerals. Descriptions overlapping with the above embodiment will be omitted as appropriate, and configurations different from the above embodiment will be mainly described.

### [Second Embodiment]

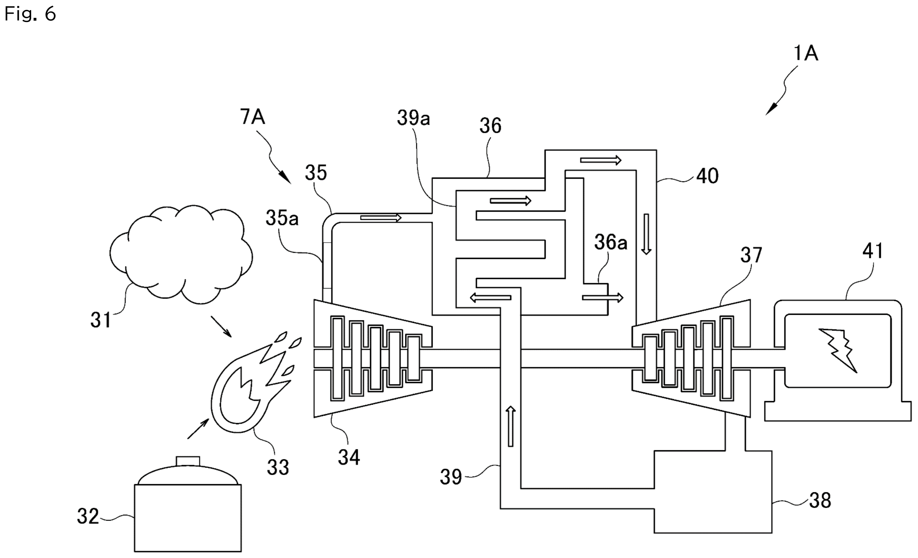

Fig. 6 is a schematic diagram of a thermal power generating system 1A according to a second embodiment. The illustrated thermal power generating system 1A includes a thermal power generating device 7A including a gas turbine 34 and a steam turbine 37, and a heat generating device 42 (to be described later) provided at a part 35a of a combustion gas discharge pipe 35 of the gas turbine 34. The gas turbine 34 discharges the gas that heats the heat generating element 14 of the heat generating device 42.

The gas turbine 34 is rotated by a pressure of a combustion gas 33 obtained by combusting air 31 and natural gas. The gas turbine 34 is connected to an electric generator 41, and electricity is generated by the electric generator 41 by the rotation of the gas turbine 34. The combustion gas discharge pipe 35 is connected to the gas turbine 34, and the combustion gas supplied to rotate the gas turbine 34 is discharged from the combustion gas discharge pipe 35. A waste heat recovery boiler 36 is connected to the combustion gas discharge pipe 35.

The steam turbine 37 is connected to a condenser 38, a first pipe 39, and a second pipe 40. A heat exchange unit 39a of the first pipe 39 is provided to pass the inside of the waste heat recovery boiler 36. Water and steam flow through the condenser 38, the first pipe 39, and the second pipe 40 as heat media. Water stored in the condenser 38 passes through the first pipe 39 and is converted into steam by exchanging heat with the combustion gas from the gas turbine 34 in the waste heat recovery boiler 36. The obtained steam passes through the second pipe to be led into the steam turbine 37. The steam turbine 37 is rotated by a pressure of steam. The steam turbine 37 is connected to the electric generator 41, and electricity is generated by the electric generator 41 by the rotation of the steam turbine 37. The steam turbine 37 is connected to the condenser 38 via a pipe, and steam supplied to rotate the steam turbine 37 becomes water by the condenser 38. The combustion gas from the gas turbine 34 exchanges heat in the waste heat recovery boiler 36, and is discharged from the pipe 36a.

The combustion gas discharge pipe 35 has, for example, a cross section of 5 m × 7 m and a length of 20 m, and in the present embodiment, the heat generating device 42 is provided at the part 35a of the combustion gas discharge pipe 35. The combustion gas supplied from the gas turbine 34 to the heat generating device 42 can heat the heat generating element 14 of the heat generating device 42.

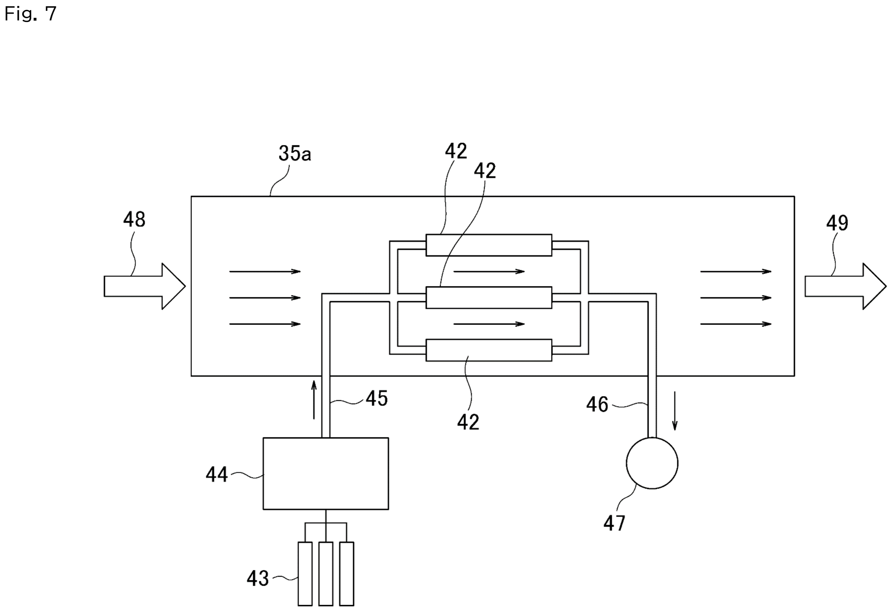

Fig. 7 is a diagram illustrating the heat generating device 42. As illustrated in Fig. 7, the heat generating device 42 is housed in the flow path of the part 35a of the combustion gas discharge pipe 35. In the configuration illustrated in Fig. 7, three heat generating devices 42 are provided, but there is no particular limitation on the number of heat generating devices 42. Each of the heat generating devices 42 has the same configuration as that of the heat generating device 11 described in the first embodiment, and has the configuration illustrated in Fig. 2A.

Each of the heat generating devices 42 is connected via a lead-in line 45 to a hydrogen tank 43 and a hydrogen supply device 44 that supplies the hydrogen-based gas, and the hydrogen-based gas is led into the heat generating device 42. Each of the heat generating devices 42 is connected via a lead-out line 46 to a pump 47, and the inside of the heat generating device 42 is depressurized or evacuated.

The combustion gas discharge pipe 35 is connected to the gas turbine 34, and a combustion gas 48 at atmospheric pressure, for example, is supplied from the gas turbine 34 to the combustion gas discharge pipe 35. The combustion gas 48 can heat a heat generating element of the heat generating device 42. A small amount of hydrogen-based gas is supplied to the heat generating element 14 of the heat generating device 42, and the inside of the heat generating device 42 is depressurized or evacuated, so that hydrogen diffuses inside the heat generating element 14, and as hydrogen diffuses, the heat generating element 14 generates heat by occluding and discharging hydrogen in the heat generating element 14. The combustion gas discharge pipe 35 is connected to the waste heat recovery boiler 36. After the combustion gas 48 heats the heat generating element 14 of the heat generating device 42 to a predetermined temperature, the excess heat generated by the heat generating element 14 is conducted and the combustion gas 48 is supplied to the waste heat recovery boiler 36 as an exhaust gas 49 which is hotter than that immediately after being discharged from the gas turbine 34, and the heat is recovered from the exhaust gas 49 in the waste heat recovery boiler 36 to generate electricity in the steam turbine 37. In this manner, the excess heat generated in the heat generating element 14 of the heat generating device 42 can be utilized as heat energy.

In the above heat generating device 42, the combustion gas 48 is supplied from the gas turbine 34, thereby heating the heat generating element 14 of the heat generating device 42 to a predetermined temperature. When the hydrogen-based gas is led into the heat generating device 42, and the inside of the heat generating device 42 is depressurized or evacuated, the excess heat is generated by occluding hydrogen into the multilayer film 62 and discharging hydrogen from the multilayer film 62. The excess heat generated in the heat generating element 14 can heat the combustion gas 48 passing through the combustion gas discharge pipe 35 by heat exchange to increase the temperature of the exhaust gas 49 supplied to the waste heat recovery boiler 36. For example, when the temperature of the combustion gas 48 supplied from the gas turbine 34 to the combustion gas discharge pipe 35 is 650°C, a temperature of the exhaust gas 49 supplied from the combustion gas discharge pipe 35 to the waste heat recovery boiler 36 can be set to 650°C or higher. Accordingly, an electric power generation efficiency of the steam turbine 37 can be improved.

According to the thermal power generating system 1A of the present embodiment, heat can be generated with a simplified configuration without a heater when using the heat generating element 14 using a hydrogen storage alloy or the like to generate heat, and the electric power generation efficiency can be improved accordingly.

### [Third Embodiment]

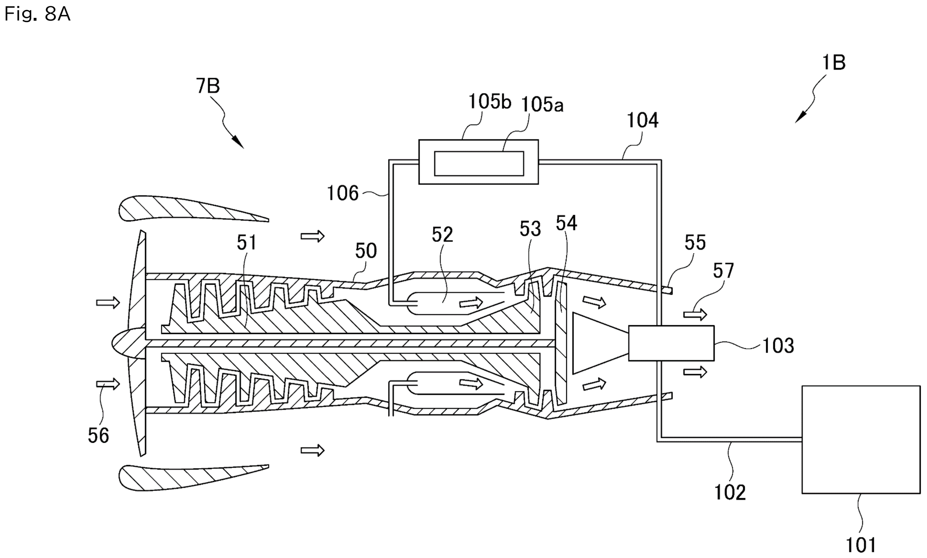

Fig. 8A is a schematic diagram of a thermal power generating system 1B according to a third embodiment. The illustrated thermal power generating system 1B includes a heat generating device 105a and a thermal power generating device 7B including a hydrogen combustion gas turbine. The thermal power generating device 7B discharges the gas that heats the hydrogen-based gas for heating the heat generating element 14 of the heat generating device 105a.

The thermal power generating device 7B includes a hydrogen combustion gas turbine 50. The hydrogen combustion gas turbine 50 includes a compressor 51, a combustor 52, turbines 53 and 54, and a discharge port 55 for combustion gas. The turbines 53 and 54 are rotated by a pressure of a combustion gas 57 obtained by leading the hydrogen-based gas into the combustor 52 to combust while inhaling outside air 56 into the hydrogen combustion gas turbine 50. The turbines 53 and 54 are connected to an electric generator (not illustrated), and electricity is generated by the electric generator by the rotation of the turbines 53 and 54. The combustion gas 57 is discharged from the discharge port 55 after the turbines 53 and 54 are rotated.

In the present embodiment, a configuration in which the heat generating device 105a is included as a supply unit of the hydrogen-based gas to the hydrogen combustion gas turbine 50 is provided. The thermal power generating system 1B is a hydrogen tank 101, a pipe 102, a heat exchanger 103, a pipe 104, the heat generating device 105a, a storage container 105b, and a pipe 106. The heat generating device 105a is stored in the storage container 105b. The hydrogen combustion gas turbine 50, the heat generating device 105a, the storage container 105b, pressure adjustment valves (not illustrated) appropriately provided on paths of the pipes 102, 104, and 106, and the like are connected to a control unit (not illustrated), and the control unit controls the driving of the hydrogen combustion gas turbine 50, the supply of the hydrogen-based gas, and the heating of the hydrogen-based gas passing the inside of the storage container 105b but passing the outside of the heat generating device 105a.

The hydrogen tank 101 is connected to the heat exchanger 103 via the pipe 102. The heat exchanger 103 is disposed on a discharge path of the combustion gas 57. The hydrogen-based gas is led into the heat exchanger 103 from the hydrogen tank 101, and heat exchange is performed between the led-in hydrogen-based gas and the combustion gas 57 flowing in the vicinity of the heat exchanger 103, thereby heating the hydrogen-based gas to, for example, 650°C. The heated hydrogen-based gas is led through the pipe 104 into the storage container 105b that stores the heat generating device 105a.

The heat generating device 105a has a configuration illustrated in Fig. 2A, and the hydrogen-based gas to be led into the heat generating device 105a is heated to a predetermined temperature by exchanging heat with the combustion gas 57 discharged from the hydrogen combustion gas turbine 50, and the heated hydrogen-based gas heats the heat generating element 14 to a predetermined temperature from outside the heat generating device 105a. A small amount of hydrogen-based gas is supplied to the heat generating element 14 of the heat generating device 105a through a pipe (not illustrated) separately provided at the heat generating device 105a, and the inside of the heat generating device 105a is depressurized or evacuated, so that hydrogen diffuses inside the heat generating element 14, and as hydrogen diffuses, the excess heat is generated by occluding hydrogen into the multilayer film 62 and discharging hydrogen from the multilayer film 62. The heat generating element 14 heats the hydrogen-based gas passing the inside of the storage container 105b but passing the outside of the heat generating device 105a to, for example, 900°C by the generated excess heat.

The heated hydrogen-based gas obtained as described above can be utilized in the hydrogen combustion gas turbine 50. The hydrogen combustion gas turbine 50 can improve the electric power generation efficiency by combusting the hydrogen-based gas heated by the heat generating device 105a.

A gas turbine output of the thermal power generating system 1B of the present embodiment is calculated by simulation. Here, it is assumed that the temperature of the hydrogen-based gas before heating in the heat exchanger 103 is 20°C, the temperature of the hydrogen-based gas after heating in the heat exchanger 103 is 650°C, the temperature of the hydrogen-based gas further heated in the heat generating device 105a is 900°C, and a combustion temperature in the combustor 52 is 1600°C. As a result of the simulation, in the thermal power generating system 1B of the present embodiment, compared with a case where the heat generating device 105a is not provided and the hydrogen-based gas is supplied without heating, an amount of fuel is decreased by 15.7%, and the gas turbine efficiency is increased by 18.6% accordingly. According to the decrease in the amount of fuel, a working fluid of the gas turbine is decreased, and the gas turbine output is decreased by 2.3%. If the increase in the gas turbine efficiency and the decrease in the gas turbine output are offset, the total gas turbine efficiency is increased by 15.9%, and for example, the gas turbine efficiency is increased from 35% to 40.5%.

The combustion gas 57 that exchanges heat with the hydrogen-based gas in the heat exchanger 103 is discharged to the outside of the hydrogen combustion gas turbine 50. For example, in a case of further including the same configuration as those of the steam turbine 37 and the waste heat recovery boiler 36 described in the second embodiment, the heat of the combustion gas 57 can be recovered to generate electricity using the steam turbine. In this case, the temperature of the combustion gas 57 is reduced by exchanging heat with the hydrogen-based gas, and the electric power generation efficiency in the steam turbine using the combustion gas 57 is accordingly reduced.

According to the thermal power generating system 1B of the present embodiment, heat can be generated with a simplified configuration without a heater when using the heat generating element 14 using a hydrogen storage alloy or the like to generate heat, and the electric power generation efficiency can be improved accordingly.

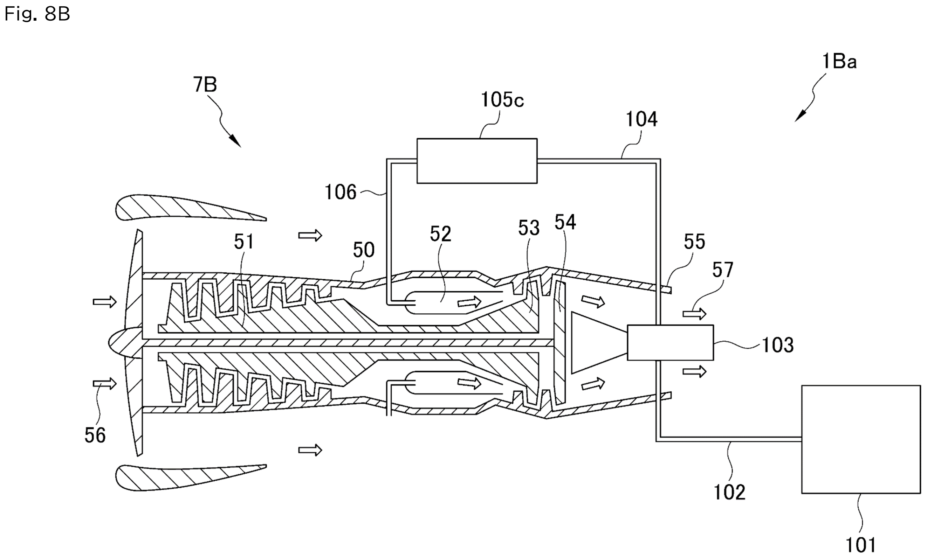

Fig. 8B is a schematic diagram of a thermal power generating system 1Ba having another configuration according to the present embodiment. In the configuration of Fig. 8B, instead of the heat generating device 105a stored in the storage container 105b illustrated in Fig. 8A, a heat generating device 105c not stored in a storage container is provided. The heat generating device 105c has a configuration illustrated in Fig. 2B, and the hydrogen-based gas to be led into the heat generating device 105c is heated to a predetermined temperature by exchanging heat with the combustion gas 57 discharged from the hydrogen combustion gas turbine 50, and the heat generating element 14 that comes into contact with the hydrogen-based gas inside the heat generating device 105c is heated to a predetermined temperature. When the heated hydrogen-based gas is led into the heat generating device 105c, the excess heat is generated by occluding hydrogen into the multilayer film 62 and discharging hydrogen from the multilayer film 62. The heat generating element 14 heats the hydrogen-based gas passing the inside of the storage container 105c to, for example, 900°C by the generated excess heat. The heated hydrogen-based gas obtained as described above can be utilized in the hydrogen combustion gas turbine 50, and the electric power generation efficiency can be improved.

### [First Modification]

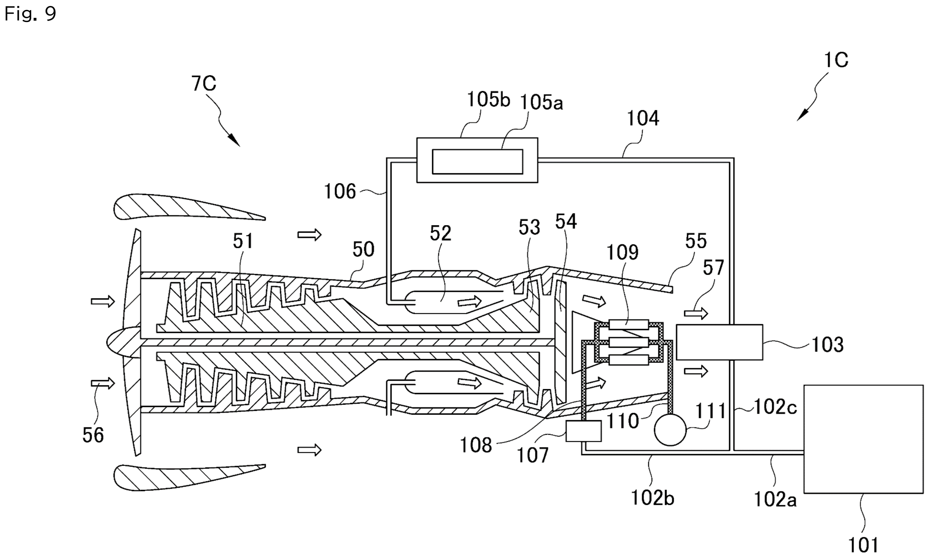

Fig. 9 is a schematic diagram of a thermal power generating system 1C according to a first modification. Similar to the third embodiment, the illustrated thermal power generating system 1C includes the heat generating device 105a and a thermal power generating device 7C including a hydrogen combustion gas turbine. The thermal power generating device 7C discharges the gas that heats the hydrogen-based gas for heating the heat generating element 14 of the heat generating device 105a. A configuration of the thermal power generating device 7C is the same as that in the third embodiment. Similar to the third embodiment, the configuration in which the heat generating device 105a is included as a supply unit of the hydrogen-based gas to the hydrogen combustion gas turbine 50 is provided.

In the present modification, a pipe 102a extending from the hydrogen tank 101 branches into a pipe 102b and a pipe 102c. The pipe 102c is, similarly to the third embodiment, connected to the heat exchanger 103, and is subsequently connected to the combustor 52 of the hydrogen combustion gas turbine 50 via the pipe 104, the storage container 105b that stores the heat generating device 105a, and the pipe 106, and the hydrogen-based gas heated by the heat generating device 105a is burned and used. The heat generating device 105a has the same configuration as that of the heat generating device 105a described in the third embodiment illustrated in Fig. 8A, and has the configuration illustrated in Fig. 2A. When the heated hydrogen-based gas is led into the storage container 105b that stores the heat generating device 105a, the heat generating element 14 of the heat generating device 105a is heated to a predetermined temperature, and the excess heat is generated by occluding hydrogen into the multilayer film 62 and discharging hydrogen from the multilayer film 62. The heat generating element 14 of the heat generating device 105a heats the hydrogen-based gas passing the inside of the storage container 105b but passing the outside of the heat generating device 105a to, for example, 900°C by the generated excess heat. The heated hydrogen-based gas obtained as described above can be utilized in the hydrogen combustion gas turbine 50. The hydrogen combustion gas turbine 50 can improve the electric power generation efficiency by combusting the hydrogen-based gas heated by the heat generating device 105a.

Instead of the heat generating device 105a stored in the storage container 105b illustrated in Fig. 9, a heat generating device not stored in a storage container and having the configuration illustrated in Fig. 2B is provided. The heat generating element 14 of the heat generating device heats the hydrogen-based gas passing the inside of the storage container 105a to, for example, 900°C by the generated excess heat, and the heated hydrogen-based gas can be combusted by the hydrogen combustion gas turbine 50 to improve the electric power generation efficiency.

The thermal power generating system 1C according to the present modification further includes a hydrogen supply device 107, a pipe 108, a heat generating device 109, a pipe 110, a pump 111 which are connected to the pipe 102b that is the other pipe branching from the pipe 102a. The heat generating device 109 is disposed on a discharge path of the combustion gas 57. The heat generating device 109 has the same configuration as that of the heat generating device 11 described in the first embodiment, and has the configuration illustrated in Fig. 2A. By supplying, from the hydrogen combustion gas turbine 50, the combustion gas 57 that heats the heat generating element 14 of the heat generating device 109, the heat generating element 14 is heated to a predetermined temperature from outside the heat generating device 109. When a small amount of hydrogen-based gas is led into the heat generating device 109, and the inside of the heat generating device 109 is depressurized or evacuated, as hydrogen diffuses inside the heat generating element 14, the excess heat is generated by occluding hydrogen into the multilayer film 62 and discharging hydrogen from the multilayer film 62. The excess heat generated in the heat generating element 14 can heat the combustion gas 57 discharged from the discharge port 55 by heat exchange. By supplying the heated combustion gas 57 to the waste heat recovery boiler 36, the excess heat generated in the heat generating element 14 can be recovered.

Although the temperature of the combustion gas 57 decreases due to the heat exchange with the hydrogen-based gas in the heat exchanger 103, the temperature also increases due to the excess heat generated in the heat generating device 109, and thus the decrease in the electric power generation efficiency in the steam turbine using the combustion gas 57 can be prevented. When a gas turbine output of the thermal power generating system 1C of the present modification is calculated by simulation assuming the same temperatures as those in the simulation of the third embodiment described above, compared with a case where the heat generating device 105a is not provided and the hydrogen-based gas is supplied without being heated, a thermal efficiency of an entire combined cycle combining the gas turbine and the steam turbine is also increased by 15.9%, and for example, the gas turbine efficiency is increased from 60% to 69.5%.

### [Second Modification]

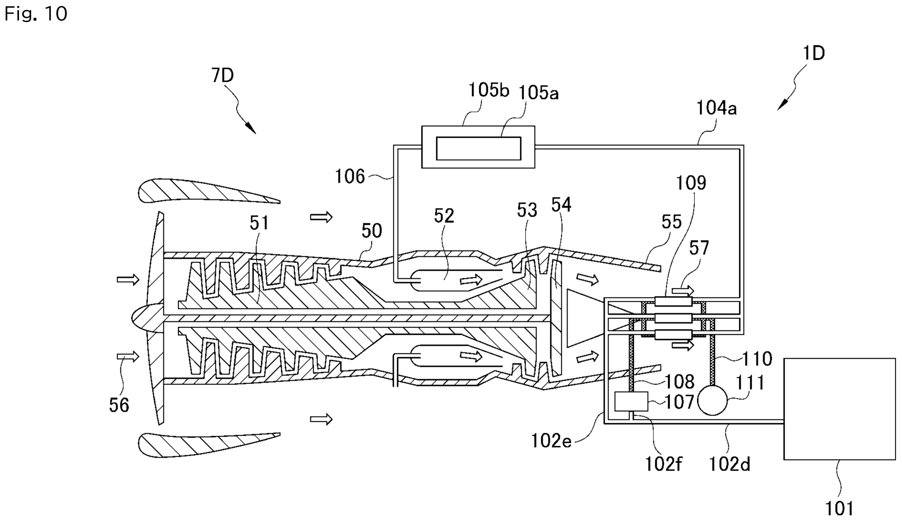

Fig. 10 is a schematic diagram of a thermal power generating system 1D according to a second modification. Similar to the third embodiment, the illustrated thermal power generating system 1D includes the heat generating device 105a and a thermal power generating device 7D including a hydrogen combustion gas turbine. A configuration of the thermal power generating device 7D is the same as that in the third embodiment. Similar to the third embodiment, the configuration in which the heat generating device 105a is included as a supply unit of the hydrogen-based gas to the hydrogen combustion gas turbine 50 is provided. The thermal power generating device 7D includes the heat generating device 109 that heats the hydrogen-based gas for heating the heat generating element 14 of the heat generating device 105a.

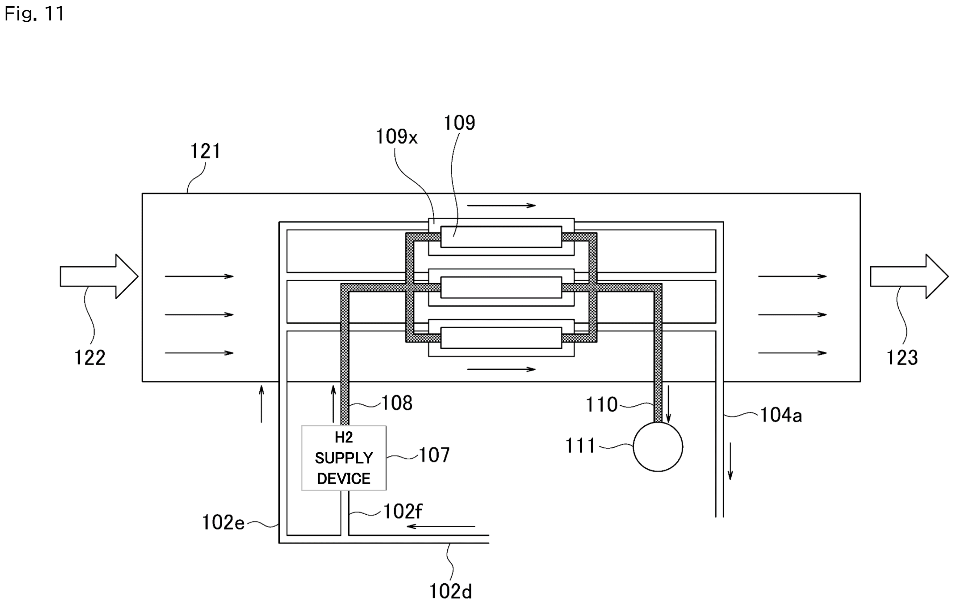

Fig. 11 is a diagram illustrating the heat generating device 109 constituting the thermal power generating system 1D. As illustrated in Fig. 11, the heat generating device 109 and a storage container 109x that stores the heat generating device 109 are disposed on a discharge path 121 of a combustion gas 122 from the hydrogen combustion gas turbine 50. The heat generating device 109 has the same configuration as that of the heat generating device 11 described in the first embodiment, and has the configuration illustrated in Fig. 2A. A pipe 102d extending from the hydrogen tank 101 branches into a pipe 102e and a pipe 102f, and the pipe 102f that is one pipe branching from the pipe 102d extending from the hydrogen tank 101 is connected to the heat generating device 109 via the hydrogen supply device 107. The heat generating device 109 is connected to the pump 111 via the pipe 110. The pipe 102e that is the other pipe branching from the pipe 102d extending from the hydrogen tank 101 is connected to the storage container 109x, and is connected to the combustor 52 of the hydrogen combustion gas turbine 50 via a pipe 104a, the heat generating device 105a, and the pipe 106.

The heat generating device 109 is stored inside the storage container 109x, and the hydrogen-based gas can be led into a space inside the heat generating device 109 and into a space outside the heat generating device 109 and inside the storage container 109x. By leading, from the hydrogen combustion gas turbine 50, the combustion gas 122 that heats the heat generating element 14 of the heat generating device 109, the heat generating element 14 is heated to a predetermined temperature from outside the heat generating device 109. When a small amount of hydrogen-based gas is led into the heat generating device 109, and the heat generating device 109 is depressurized or evacuated, as hydrogen diffuses inside the heat generating element 14, the excess heat is generated by occluding hydrogen into the multilayer film 62 and discharging hydrogen from the multilayer film 62. The excess heat generated in the heat generating element 14 of the heat generating device 109 can heat the hydrogen-based gas flowing through the outside of the heat generating device 109 and the inside of the storage container 109x by heat exchange. For example, the hydrogen-based gas at 20°C is led from the hydrogen tank 101, and the hydrogen-based gas heated to 650°C is led out from the pipe 104a.

The hydrogen-based gas heated to, for example, 650°C by heat exchange inside the storage container 109x is led through the pipe 104a into the storage container 105b in which the heat generating device 105a is stored. The heat generating device 105a has the same configuration as that of the heat generating device 105a described in the third embodiment illustrated in Fig. 8A, and has the configuration illustrated in Fig. 2A. When the heated hydrogen-based gas is led into the storage container 105b in which the heat generating device 105a is stored, the heat generating element 14 of the heat generating device 105a is heated to a predetermined temperature, and the excess heat is generated by occluding hydrogen into the multilayer film 62 and discharging hydrogen from the multilayer film 62. The heat generating element 14 of the heat generating device 105a heats the hydrogen-based gas passing the inside of the storage container 105b but passing the outside of the heat generating device 105a to, for example, 900°C by the generated excess heat. The heated hydrogen-based gas obtained as described above can be utilized in the hydrogen combustion gas turbine 50. The hydrogen combustion gas turbine 50 can improve the electric power generation efficiency by combusting the hydrogen-based gas heated by the heat generating device 105a.

Instead of the heat generating device 105a stored in the storage container 105b illustrated in Fig. 10, a heat generating device not stored in a storage container and having the configuration illustrated in Fig. 2B is provided. The heat generating element 14 of the heat generating device heats the hydrogen-based gas passing the inside of the storage container to, for example, 900°C by the generated excess heat, and the heated hydrogen-based gas can be combusted by the hydrogen combustion gas turbine to improve the electric power generation efficiency.

The excess heat generated in the heat generating element 14 of the heat generating device 109 heats the hydrogen-based gas flowing through the inside of the storage container 109x and through a space outside the heat generating device 109 by heat exchange. When the hydrogen-based gas to be led into the heat generating device 105a is heated using the heat exchanger as in the third embodiment, the decrease in the temperature of the combustion gas 122 occurs, but since the hydrogen-based gas to be led into the heat generating device 105a is heated by the excess heat generated in the heat generating device 109, there is no decrease in the temperature of the combustion gas 122. For example, the combustion gas 122 supplied at a temperature of 650°C is discharged as an exhaust gas 123 at 650°C without any temperature decrease, so that a decrease in the electric power generation efficiency in the steam turbine can be prevented. When a gas turbine output of the thermal power generating system 1D of the present modification is calculated by simulation assuming the same temperatures as those in the simulation of the third embodiment described above, compared with a case where the heat generating device 105a is not provided and the hydrogen-based gas is supplied without being heated, a thermal efficiency of an entire combined cycle combining the gas turbine and the steam turbine is also increased by 15.9%, and for example, the gas turbine efficiency is increased from 60% to 69.5%.

In the thermal power generating system 1D of the present modification, a method of driving the heat generating device 109 can be changed as follows in an initial stage of driving. In the initial stage of the driving of the thermal power generating system, the temperature of the heat generating device 109 is not increased, and thus the hydrogen-based gas is not supplied to the heat generating device 109 and the storage container 109x, but is supplied to the hydrogen combustion gas turbine 50 using a separately provided hydrogen-based gas bypass line, and the combustion gas 122 is obtained. After obtaining the combustion gas 122 and being able to sufficiently increase the temperature of the heat generating element 14 of the heat generating device 109, the hydrogen-based gas is allowed to flow into the heat generating device 109 and the storage container 109x, and the heated hydrogen-based gas can be led out from the pipe 104a as described above.

### [Third Modification]

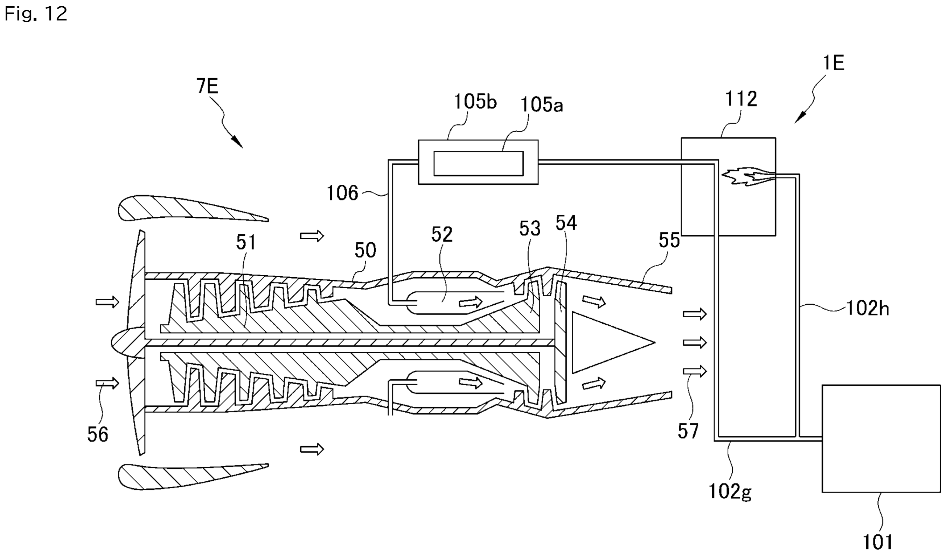

Fig. 12 is a schematic diagram of a thermal power generating system 1E according to a third modification. Similar to the third embodiment, the illustrated thermal power generating system 1E includes the heat generating device 105a and a thermal power generating device 7E including a hydrogen combustion gas turbine. A configuration of the thermal power generating device 7E is the same as that in the third embodiment. Similar to the third embodiment, the configuration in which the heat generating device 105a is included as a supply unit of the hydrogen-based gas to the hydrogen combustion gas turbine 50 is provided, and the hydrogen-based gas heated by the heat generating device 105a is combusted and used. The heat generating device 105a has the same configuration as that of the heat generating device 105a described in the third embodiment illustrated in Fig. 8A, and has the configuration illustrated in Fig. 2A. When the hydrogen-based gas heated to, for example, 650°C is led into the storage container 105b in which the heat generating device 105a is stored, the heat generating element 14 of the heat generating device 105a is heated to a predetermined temperature, and as hydrogen diffuses inside the heat generating element 14, the excess heat is generated by occluding hydrogen into the multilayer film 62 and discharging hydrogen from the multilayer film 62. The heat generating element 14 of the heat generating device 105a heats the hydrogen-based gas passing the inside of the storage container 105b but passing the outside of the heat generating device 105a to, for example, 900°C by the generated excess heat. The heated hydrogen-based gas obtained as described above can be utilized in the hydrogen combustion gas turbine 50. The hydrogen combustion gas turbine 50 can improve the electric power generation efficiency by combusting the hydrogen-based gas heated by the heat generating device 105a.

Instead of the heat generating device 105a stored in the storage container 105b illustrated in Fig. 12, a heat generating device not stored in a storage container and having the configuration illustrated in Fig. 2B is provided. The heat generating element 14 of the heat generating device heats the hydrogen-based gas passing the inside of the storage container to, for example, 900°C by the generated excess heat, and the heated hydrogen-based gas can be combusted by the hydrogen combustion gas turbine to improve the electric power generation efficiency.

The present modification includes a pipe 102g extending from the hydrogen tank 101, a pipe 102h branching from the pipe 102g, and a hydrogen boiler 112 that combusts the hydrogen-based gas supplied from the pipe 102h to heat the hydrogen-based gas flowing through the pipe 102g. The hydrogen-based gas to be led into the storage container 105b in which the heat generating device 105a is stored is heated to, for example, 650°C by the heating by the hydrogen boiler 112. The hydrogen-based gas is heated to, for example, 900°C by the heat generating device 105a. The heated hydrogen-based gas obtained as described above can be utilized in the hydrogen combustion gas turbine 50. The hydrogen combustion gas turbine 50 can improve the electric power generation efficiency by combusting the hydrogen-based gas heated by the heat generating device 105a.

When a gas turbine output of the thermal power generating system 1E of the present modification is calculated by simulation assuming the same temperatures as those in the simulation of the third embodiment described above, in the thermal power generating system 1E of the present modification, compared with a case where the heat generating device 105a is not provided and the hydrogen-based gas is supplied without being heated, an amount of fuel is decreased by 3.1%, and the gas turbine efficiency increases by 3.2% accordingly. According to the decrease in the amount of fuel, a working fluid of the gas turbine is decreased, and the gas turbine output is decreased by 2.3%. If the increase in the above gas turbine efficiency and the decrease in the above gas turbine output are offset, both the gas turbine efficiency and the thermal efficiency of the entire combined cycle combining the gas turbine and the steam turbine are increased by about 1%. For example, the thermal efficiency of the entire combined cycle combining the gas turbine and the steam turbine is increased from 50% to 50.5%.

### [Fourth Embodiment]

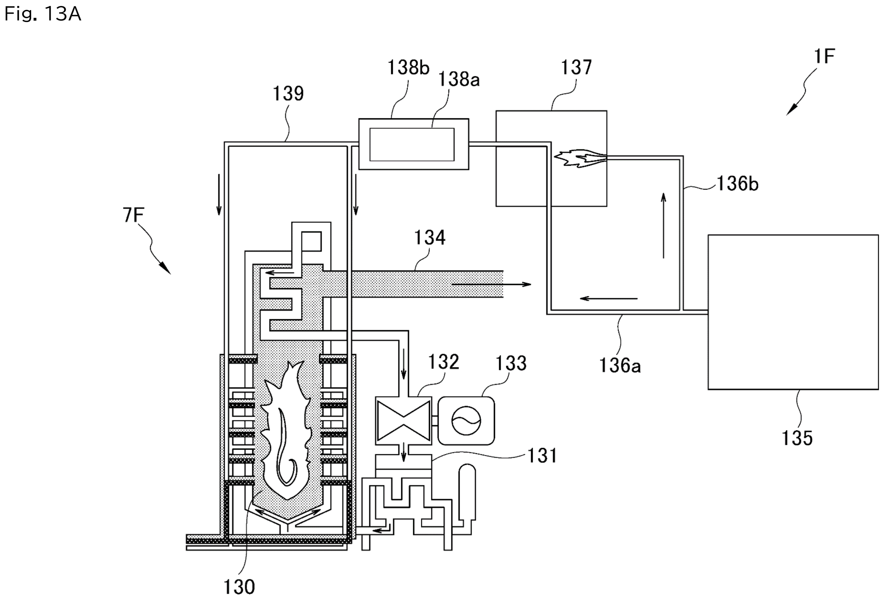

Fig. 13A is a schematic diagram of a thermal power generating system 1F according to a fourth embodiment. The illustrated thermal power generating system 1F includes a heat generating device 138a and a thermal power generating device 7F including a hydrogen combustion boiler. The thermal power generating device 7F includes a hydrogen combustion unit 130, a condenser 131, a steam turbine 132, and an electric generator 133, and further includes a flow path that circulates the hydrogen combustion unit 130, the steam turbine 132, and the condenser 131.

When hydrogen is combusted in the hydrogen combustion unit 130, water, which is a heat medium flowing through the flow path that circulates the hydrogen combustion unit 130, the steam turbine 132, and the condenser 131, is heated and becomes steam. The obtained steam is supplied to the steam turbine 132. The steam turbine 132 is rotated by a pressure of steam. The steam turbine 132 is connected to the electric generator 133, and electricity is generated by the electric generator 133 by the rotation of the steam turbine 132. The steam turbine 132 is connected to the condenser 131 via a pipe, and steam used to rotate the steam turbine 132 becomes water by the condenser 131. The hydrogen combustion unit 130 is provided with a discharge port 134, and the combustion gas from the hydrogen combustion unit 130 is discharged from the discharge port 134.

The present embodiment includes a pipe 136a extending from the hydrogen tank 135, a pipe 136b branching from the pipe 136a, and the hydrogen boiler 137 that combusts the hydrogen-based gas led from the pipe 136b to heat the hydrogen-based gas flowing through the pipe 136a. The hydrogen-based gas to be led into the storage container 138b in which the heat generating device 138a is stored is heated to, for example, 650°C by the heating by the hydrogen boiler 137. The heat generating device 138a has the same configuration as that of the heat generating device 105a described in the third embodiment illustrated in Fig. 8A, and has the configuration illustrated in Fig. 2A. When the heated hydrogen-based gas is led into the storage container 138b in which the heat generating device 138a is stored, the heat generating element 14 of the heat generating device 138a is heated to a predetermined temperature, and as hydrogen diffuses inside the heat generating element 14, the excess heat is generated by occluding hydrogen into the multilayer film 62 and discharging hydrogen from the multilayer film 62. The heat generating element 14 of the heat generating device 138a heats the hydrogen-based gas passing the inside of the storage container 138b but passing the outside of the heat generating device 138a to, for example, 900°C by the generated excess heat. The heated hydrogen-based gas obtained as described above is supplied to the hydrogen combustion unit 130 as fuel, and is utilized in the hydrogen combustion boiler. The hydrogen combustion boiler can improve the electric power generation efficiency by combusting the hydrogen-based gas heated by the heat generating device 138a.

When a gas turbine output of the thermal power generating system 1F of the present embodiment is calculated by simulation assuming the same temperatures as those in the simulation of the third embodiment described above, in the thermal power generating system 1F of the present embodiment, compared with a case where the heat generating device 138a is not provided and the hydrogen-based gas is supplied without being heated, an amount of fuel is decreased by 3.1%, and the entire efficiency of combining the boiler and the turbine combination is increased by 3.2% accordingly, for example, the entire efficiency of combining the boiler and the turbine combination is increased from 43% to 47.5%.

According to the thermal power generating system 1F of the present embodiment, heat can be generated with a simplified configuration without a heater when using the heat generating element 14 using a hydrogen storage alloy or the like to generate heat, and the electric power generation efficiency can be improved accordingly.

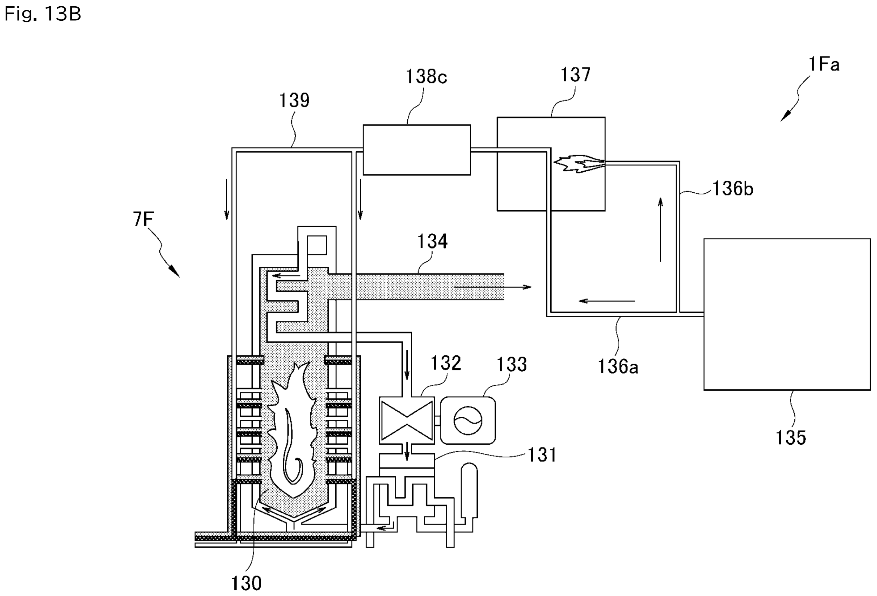

Fig. 13B is a schematic diagram of a thermal power generating system 1Fa having another configuration according to the fourth embodiment. In the configuration of Fig. 13B, instead of the heat generating device 138a stored in the storage container 138b illustrated in Fig. 13A, a heat generating device 138c not stored in the storage container is provided. The heat generating device 138c has the configuration illustrated in Fig. 2B, the heat generating element 14 of the heat generating device 138c heats the hydrogen-based gas passing the inside of the storage container 138c to, for example, 900°C by the generated excess heat, and the heated hydrogen-based gas can be combusted by the hydrogen combustion boiler to improve the electric power generation efficiency.

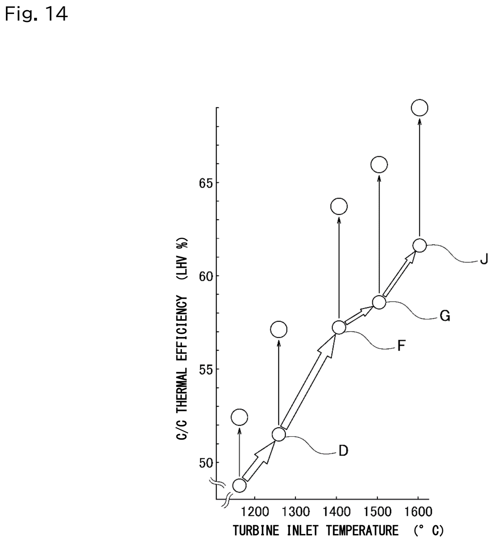

Fig. 14 is a diagram illustrating an improvement in the thermal efficiency (C/C thermal efficiency) of the entire combined cycle that combines the gas turbine and the steam turbine of the thermal power generating system having the hydrogen combustion gas turbine according to each of the above embodiments and modifications. As illustrated in Fig. 14, a turbine inlet temperature increases with a turbine generation in the order of points indicated by D, F, G, and J in Fig. 14, and the C/C thermal efficiency also increases accordingly.

Here, as shown in the above embodiments and modifications, when heat is generated using a heat generating element that uses a hydrogen storage alloy or the like, heat is generated using a simplified configuration without using a heater, and the hydrogen-based gas heated by the heat generating device is combusted, thereby improving the electric power generation efficiency, and as illustrated in Fig. 14, the C/C thermal efficiency can be improved by an amount of arrows extending from the points indicated by D, F, G, and J.

### [Fourth Modification]

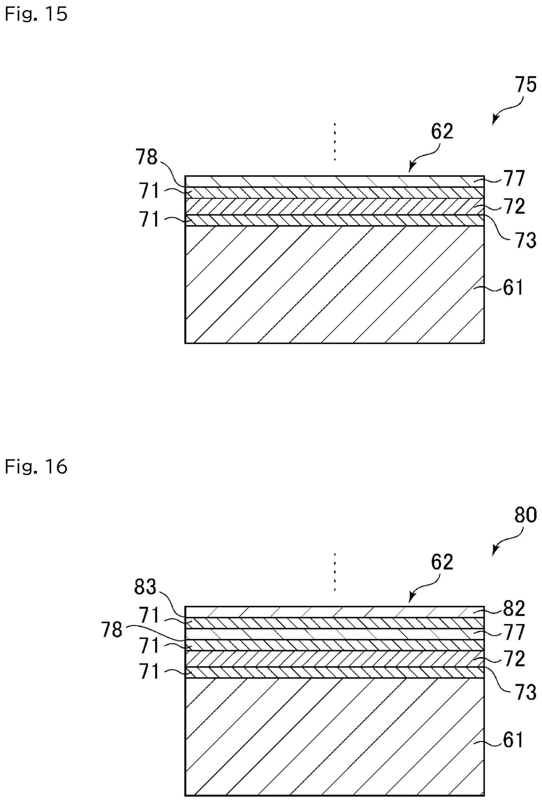

Fig. 15 is a diagram illustrating a heat generating element having a first layer, a second layer, and a third layer according to a fourth modification. A heat generating element 75 illustrated in Fig. 15 may be provided instead of the heat generating element 14 in the above embodiments and modifications. In the heat generating element 75 illustrated in Fig. 15, the multilayer film 62 of the stacked body further has a third layer 77 in addition to the first layer 71 and the second layer 72. The third layer 77 is made of a hydrogen storage metal, a hydrogen storage alloy, or ceramics different from the first layer 71 and the second layer 72. A thickness of the third layer 77 is preferably less than 1000 nm. In Fig. 15, the first layer 71, the second layer 72, and the third layer 77 are stacked on the front surface of the support 61 in order of the first layer 71, the second layer 72, the first layer 71, and the third layer 77. The first layer 71, the second layer 72, and the third layer 77 may be stacked on the front surface of the support 61 in order of the first layer 71, the third layer 77, the first layer 71, and the second layer 72. That is, the multilayer film 62 has a stacking structure in which the first layer 71 is provided between the second layer 72 and the third layer 77. The multilayer film 62 preferably has one or more third layers 77. Similar to the heterogeneous material interface 73, the hydrogen atoms permeate through a heterogeneous material interface 78 formed between the first layer 71 and the third layer 77.

The third layer 77 is made of, for example, any one of Ni, Pd, Cu, Cr, Fe, Mg, Co, an alloy thereof, SiC, CaO, Y₂O₃, TiC, LaB₆, SrO, and BaO. The alloy for forming the third layer 77 is preferably an alloy made of two or more of Ni, Pd, Cu, Cr, Fe, Mg, and Co. The alloy for forming the third layer 77 may be an alloy obtained by adding an additive element to Ni, Pd, Cu, Cr, Fe, Mg, or Co.

In particular, the third layer 77 is preferably made of any one of CaO, Y₂O₃, TiC, LaB₆, SrO, and BaO. In the heat generating element 75 having the third layer 77 made of any one of CaO, Y₂O₃, TiC, LaB₆, SrO, and BaO, an occluding amount of hydrogen is increased, an amount of hydrogen permeating through the heterogeneous material interface 73 and the heterogeneous material interface 78 is increased, and a high output of excess heat can be achieved. The thickness of the third layer 77 made of any one of CaO, Y₂O₃, TiC, LaB₆, SrO, and BaO is preferably 10 nm or less. Accordingly, the hydrogen atoms easily permeate through the multilayer film 62. The third layer 77 made of any one of CaO, Y₂O₃, TiC, LaB₆, SrO, and BaO may not be formed into a complete film shape and may be formed into an island shape. The first layer 71 and the third layer 77 are preferably formed continuously in a vacuum state. Accordingly, between the first layer 71 and the third layer 77, no natural oxide film is formed and only the heterogeneous material interface 78 is formed.

A combination of the first layer 71, the second layer 72, and the third layer 77 is preferably Pd-CaO-Ni, Pd-Y₂O₃-Ni, Pd-TiC-Ni, Pd-LaB₆-Ni, Ni-CaO-Cu, Ni-Y₂O₃-Cu, Ni-TiC-Cu, Ni-LaB₆-Cu, Ni-Co-Cu, Ni-CaO-Cr, Ni-Y₂O₃-Cr, Ni-TiC-Cr, Ni-LaB₆-Cr, Ni-CaO-Fe, Ni-Y₂O₃-Fe, Ni-TiC-Fe, Ni-LaB₆-Fe, Ni-Cr-Fe, Ni-CaO-Mg, Ni-Y₂O₃-Mg, Ni-TiC-Mg, Ni-LaB₆-Mg, Ni-CaO-Co, Ni-Y₂O₃-Co, Ni-TiC-Co, Ni-LaB₆-Co, Ni-CaO-SiC, Ni-Y₂O₃-SiC, Ni-TiC-SiC, or Ni-LaB₆-SiC when types of elements are expressed as "first layer 71-third layer 77-second layer 72".

### [Fifth Modification]

Fig. 16 is a diagram illustrating a heat generating element having a first layer, a second layer, a third layer, and a fourth layer according to a fifth modification. A heat generating element 80 illustrated in Fig. 16 may be provided instead of the heat generating element 14 in each of the above embodiments and modifications. In the heat generating element 80 illustrated in Fig. 16, the multilayer film 62 of the stacked body further has a fourth layer 82 in addition to the first layer 71, the second layer 72, and the third layer 77. The fourth layer 82 is made of a hydrogen storage metal, a hydrogen storage alloy, or ceramics different from the first layer 71, the second layer 72, and the third layer 77. A thickness of the fourth layer 82 is preferably less than 1000 nm. In Fig. 16, the first layer 71, the second layer 72, the third layer 77, and the fourth layer 82 are stacked on the front surface of the support 61 in order of the first layer 71, the second layer 72, the first layer 71, the third layer 77, the first layer 71, and the fourth layer 82. The first layer 71, the second layer 72, the third layer 77, and the fourth layer 82 may be stacked on the front surface of the support 61 in order of the first layer 71, the fourth layer 82, the first layer 71, the third layer 77, the first layer 71, and the second layer 72. That is, the multilayer film 62 has a stacking structure in which the second layer 72, the third layer 77, and the fourth layer 82 are stacked in any order and the first layer 71 is provided between the second layer 72 and the third layer 77, between the third layer 77 and the fourth layer 82, and between the second layer 72 and the fourth layer 82. The multilayer film 62 preferably has one or more fourth layers 82. Similar to the heterogeneous material interface 73 and the heterogeneous material interface 78, the hydrogen atoms permeate through a heterogeneous material interface 83 formed between the first layer 71 and the fourth layer 82.

The fourth layer 82 is made of, for example, any one of Ni, Pd, Cu, Cr, Fe, Mg, Co, an alloy thereof, SiC, CaO, Y₂O₃, TiC, LaB₆, SrO, and BaO. The alloy for forming the fourth layer 82 is preferably an alloy made of two or more of Ni, Pd, Cu, Cr, Fe, Mg, and Co. The alloy for forming the fourth layer 82 may be an alloy obtained by adding an additive element to Ni, Pd, Cu, Cr, Fe, Mg, or Co.

In particular, the fourth layer 82 is preferably made of any one of CaO, Y₂O₃, TiC, LaB₆, SrO, and BaO. In the heat generating element 80 having the fourth layer 82 made of any one of CaO, Y₂O₃, TiC, LaB₆, SrO, and BaO, an occluding amount of hydrogen is increased, an amount of hydrogen permeating through the heterogeneous material interface 73, the heterogeneous material interface 78, and the heterogeneous material interface 83 is increased, and a high output of excess heat can be achieved. A thickness of the fourth layer 82 made of any one of CaO, Y₂O₃, TiC, LaB₆, SrO, and BaO is preferably 10 nm or less. Accordingly, the hydrogen atoms easily permeate through the multilayer film 62. The fourth layer 82 made of any one of CaO, Y₂O₃, TiC, LaB₆, SrO, and BaO may not be formed into a complete film shape and may be formed into an island shape. The first layer 71 and the fourth layer 82 are preferably formed continuously in a vacuum state. Accordingly, between the first layer 71 and the fourth layer 82, no natural oxide film is formed and only the heterogeneous material interface 83 is formed.

A combination of the first layer 71, the second layer 72, the third layer 77, and the fourth layer 82 is preferably Ni-CaO-Cr-Fe, Ni-Y₂O₃-Cr-Fe, Ni-TiC-Cr-Fe, or Ni-LaB₆-Cr-Fe when types of elements are expressed as "first layer 71-fourth layer 82-third layer 77-second layer 72".

As the heat generating element including a plurality of layers, two or more of the heat generating element 14 illustrated in Fig. 4, the heat generating element 75 illustrated in Fig. 15, and the heat generating element 80 illustrated in Fig. 16 may be mixed and used. For example, the heat generating element on an inner peripheral side and the heat generating element on an outer peripheral side may use heat generating elements have different layer configurations. The heat generating elements having a plurality of layer configurations may be arranged in any order. A configuration of the multilayer film 62 such as a ratio of layer thicknesses, the number of layers of each layer, and a material may be appropriately changed according to a temperature to be used.

### Reference Sign List

- 1: heat generating system
- 2: storage container
- 3: hydrogen tank
- 4: lead-in line
- 5: lead-out line
- 6: pump
- 7: heat source
- 8: pipe
- 9: pipe
- 10: control unit
- 11: heat generating device

## Claims

1. A heat generating system comprising:
a heat generating device including a heat generating element in which a multilayer film that generates heat by occluding and discharging hydrogen is formed on a front surface of a support made of at least one of a porous body, a hydrogen occluding and discharging film, and a proton conductor, a sealed container that stores the heat generating element, a lead-in line that leads a hydrogen-containing gas into the sealed container, and a lead-out line that leads out the hydrogen-containing gas supplied for the heat generating element to generate heat by occluding and discharging the hydrogen in the heat generating element; and
a heat source that supplies a gas that heats the heat generating element from outside the sealed container, or that heats the hydrogen-containing gas that heats the heat generating element inside the sealed container.

2. The heat generating system according to claim 1, wherein
the multilayer film includes a first layer that is made of a hydrogen storage metal or a hydrogen storage alloy and has a thickness of less than 1000 nm, and a second layer that is made of a hydrogen storage metal or a hydrogen storage alloy, which is different from that of the first layer, or ceramics and has a thickness of less than 1000 nm.

3. A thermal power generating system comprising:
a heat generating device including a heat generating element in which a multilayer film that generates heat by occluding and discharging hydrogen is formed on a front surface of a support made of at least one of a porous body, a hydrogen occluding and discharging film, and a proton conductor, a sealed container that stores the heat generating element, a lead-in line that leads a hydrogen-containing gas into the sealed container, and a lead-out line that leads out the hydrogen-containing gas supplied for the heat generating element to generate heat by occluding and discharging the hydrogen in the heat generating element; and
a thermal power generating device including a gas turbine, wherein
the gas turbine includes a hydrogen boiler that discharges a gas that heats the heat generating element from outside the sealed container or a gas that heats the hydrogen-containing gas that heats the heat generating element inside the sealed container, or that heats the hydrogen-containing gas that heats the heat generating element from outside the sealed container or inside the sealed container.

4. The thermal power generating system according to claim 3, wherein
the multilayer film includes a first layer that is made of a hydrogen storage metal or a hydrogen storage alloy and has a thickness of less than 1000 nm, and a second layer that is made of a hydrogen storage metal or a hydrogen storage alloy, which is different from that of the first layer, or ceramics and has a thickness of less than 1000 nm.

5. The thermal power generating system according to claim 3, wherein
the thermal power generating device further includes a steam turbine.

6. The thermal power generating system according to claim 3, wherein
the thermal power generating device is a power generating device including a hydrogen combustion gas turbine.

7. The thermal power generating system according to claim 6, wherein
the hydrogen-containing gas heated by the heat generated by the heat generating element due to the occluding and discharging of the hydrogen in the heat generating element is combusted by the hydrogen combustion gas turbine to generate electricity.

8. A thermal power generating system comprising:
a heat generating device including a heat generating element in which a multilayer film that generates heat by occluding and discharging hydrogen is formed on a front surface of a support made of at least one of a porous body, a hydrogen occluding and discharging film, and a proton conductor, a sealed container that stores the heat generating element, a lead-in line that leads a hydrogen-containing gas into the sealed container, and a lead-out line that leads out the hydrogen-containing gas supplied for the heat generating element to generate heat by occluding and discharging the hydrogen in the heat generating element;
a hydrogen boiler that heats the hydrogen-containing gas for heating the heat generating element from outside the sealed container or inside the sealed container; and
a hydrogen combustion boiler that combusts the hydrogen-containing gas heated by the heat generated by the heat generating element due to the occluding and discharging of the hydrogen in the heat generating element.

9. The thermal power generating system according to claim 8, wherein
the multilayer film includes a first layer that is made of a hydrogen storage metal or a hydrogen storage alloy and has a thickness of less than 1000 nm, and a second layer that is made of a hydrogen storage metal or a hydrogen storage alloy, which is different from that of the first layer, or ceramics and has a thickness of less than 1000 nm.

10. A heat generating method comprising:
storing, in a sealed container, a heat generating element in which a multilayer film that generates heat by occluding and discharging hydrogen is formed on a front surface of a support made of at least one of a porous body, a hydrogen occluding and discharging film, and a proton conductor;
supplying, from a heat source, a gas that heats the heat generating element from outside the sealed container, or heating, by the heat source, a hydrogen-containing gas that heats the heat generating element inside the sealed container; and
leading the hydrogen-containing gas into the sealed container, and causing the heat generating element to generate heat by occluding and discharging the hydrogen in the heat generating element.
